## Europäisches Patentamt
## European Patent Office
## Office européen des brevets

(11) Numéro de publication: **0 235 488**
**B1**

---

(12) FASCICULE DE BREVET EUROPEEN

(45) Date de publication du fascicule du brevet:
24.01.90

(51) Int. Cl.⁴: **B65G 1/137**

(21) Numéro de dépôt: **86440017.1**

(22) Date de dépôt: **04.03.86**

---

(54) Installation de manutention robotisée.

---

(43) Date de publication de la demande:
**09.09.87 Bulletin 87/37**

(45) Mention de la délivrance du brevet:
**24.01.90 Bulletin 90/4**

(84) Etats contractants désignés:
**AT BE CH DE FR GB IT LI LU NL SE**

(56) Documents cités:
**EP-A- 0 169 118**
**EP-A- 0 169 156**
**DE-A- 3 317 087**
**FR-A- 2 128 281**
**GB-A- 2 080 265**
**US-A- 3 840 131**

**PATENTS ABSTRACTS OF JAPAN,**
**vol. 7, no. 265 (M-258)[1410], 25 novembre 1983; &**
**JP-A-58 144 002 (HITACHI SEISAKUSHO**
**K.K.) 27-08-1983**

(73) Titulaire: **REDOUTE CATALOGUE Société Anonyme:,**
**57 rue Blanchemaille, F-59100 Roubaix (Nord)(FR)**

(72) Inventeur: **Bonneton, Marc, 325 boulevard Gambetta,**
**F-49200 Tourcoing (Nord)(FR)**
Inventeur: **Janvier, Dominique, 31 Avenue de la**
**Roseraie, F-59000 Lille (Nord)(FR)**

(74) Mandataire: **Lepage, Jean-Pierre, Cabinet Lepage &**
**Aubertin Innovations et Prestations 23/25, rue Nicolas**
**Leblanc B.P. 1069, F-59011 Lille Cédex 1 (Nord)(FR)**

---

## Description

L'inventin est relative à une installation de manutention robotisée. Elle sera notamment destinée à équiper un magasin de stockage d'articles de types divers soit pour autoriser le réapprovisionnement du stock, soit pour autoriser le regroupement d'articles prélevés dans le magasin de stockage pour former des lots d'articles constituant une commande.

Elle trouvera notamment son application pour les magasins de stockage rencontrés en particulier dans les Sociétés de ventes par correspondance qui proposent à leurs clients des multitudes d'articles de types divers qui sont ensuite regroupés puis expédiés en fonction de la commande de chacun des clients. Toutefois, d'autres applications pourraient être envisagées telles que pour le magasinage en confection textile ou dans d'autres domaines.

Actuellement, pour assurer le stockage de nombreux articles dans des magasins, il est connu d'utiliser des casiers disposés au long des allées du magasin, chaque casier renfermant des bacs de stock unitaire où sont disposés les objets à stocker.

Pour regrouper des articles selon une liste ou une commande préétablie, on voit couramment des magasiniers se déplacer à l'intérieur de ces magasins et prélever un ou plusieurs articles dans les différents bacs de stock.

Selon les articles à manipuler, le prélèvement de ceux-ci peut être opéré à l'aide de chariots à fourches pilotés par le magasinier qui se déplace dans les allées et qui manipule les bacs remplis d'articles.

Un service de regroupement des commandes doit ensuite prélever les articles nécessaires dans les bacs, diriger les articles vers un service d'expédition où les commandes de chaque client sont regroupées et expédiées.

Ce procédé, quasi manuel, exige de nombreuses manutentions et se trouve très rapidement limité à de petits magasins dont le nombre de références à gérer est peu important et dont les opérations sont peu fréquentes.

En effet, lorsque le nombre d'articles stockés est important et le nombre d'opérations élevé, il faudra envisager d'employer une quantité importante de magasiniers qui devront chacun disposer de moyens de manutention et de plus, connaître parfaitement l'emplacement des articles dans le magasin. Ceci diminuera l'efficacité du système et la rapidité des sorties d'articles mais par contre augmentera en partie le coût de l'article livré du fait du poste manutention.

C'est pourquoi, certaines industries ont pensé à utiliser des transtockeurs manuels qui sont des chariots spécialisés destinés à balayer une allée de magasin bordée de casiers. Ces transporteurs, présentent une ossature généralement guidée par un rail au sol et/ou aérien ainsi qu'une plateforme élévatrice sur laquelle vient prendre place le magasinier. En outre, pour éviter des mouvements d'allées et venues on a prévu dans certains cas d'y placer plusieurs bacs de réception afin de regrouper plusieurs commandes sans parcourir plusieurs fois l'allée du magasin.

Ces installations quoique présentant des avantages par rapport au procédé manuel précédent, présentent de nombreux inconvénients à savoir : affectation d'un magasinier à un transtockeur manuel, connaissance parfaite du magasin par le magasinier, affectation d'une allée de magasin à un transtockeur. Ces différents inconvénients ne rendent pas souple la manutention dans le magasin et ne sont pas sans poser de problème d'efficacité et de coût de revient.

Pour améliorer les transtockeurs manuels précités, certains chariots transtockeurs ont fait l'objet d'une automatisation qui organise la manutention selon un programme préétabli.

De tels types de chariots transtockeurs mécanisés permettent d'aller rechercher un bac contenant des pièces détachées placé dans un endroit précis des casiers référencés, puis en vue d'éviter les encombrements, les bacs ainsi prélevés sont déposés par le transtockeur dans une allée centrale transversale aux allées du transtockeur, allée centrale généralement munie de convoyeurs à bande, ce qui permet de diriger les pièces vers un centre de regroupement.

Certes, ces dispositifs plus perfectionnés permettent d'améliorer la manutention dans certains cas mais ne donnent pas toujours entière satisfaction pour différents motifs.

En particulier, on pourrait citer le fait que ces transtockeurs ne manipulent généralement qu'une référence à la fois constituée par exemple par une palette ou un bac complet sur laquelle sont disposés plusieurs objets. En aucun cas, ils ne permettent de prélever un des objets disposés sur ladite palette ou dans ledit bac.

De plus, rares sont les transtockeurs qui disposent d'un stockage transitoire sur ce dernier car les bacs, palettes et objets manutentionnés sont généralement volumineux et lourds. De ce fait, le transtockeur doit effectuer un ou plusieurs aller retour durant son fonctionnement ce qui augmente le temps du cycle de manutention.

Un autre inconvénient important des systèmes transtockeurs connus, cités ci-dessus, réside dans le fait que ces systèmes sont prévus à poste fixe et sont directement liés à une allée de magasin; en effet, ces transtockeurs comportent un chariot guidé au sol par un ou des rails de roulement placés devant la série de rayonnage.

Or, si le transtockeur vient à tomber en panne, le fonctionnement du magasin peut être paralysé car le transtockeur immobilisé ferait obstacle à un éventuel transtockeur de dépannage qui d'ailleurs sera compliqué à mettre en oeuvre du fait des double commandes électriques nécessaires.

De plus, on peut également souligner le fait que, de par la rigidité des systèmes de manutention, un magasin automatisé à l'aide de transtockeurs est conçu pour travailler à une cadence prédéterminée qui ne peut pas être modulée en fonction du nombre de commandes à traiter. Aussi, pour certaines activités où la rotation des stocks est soit plus faible, soit plus forte qu'une cadence moyenne du fait de la diminution ou de l'augmentation du nombre de commandes à traiter, la mise en place d'un système automatisé à transtockeurs connu ne semble pas adaptée ni avantageuse.

Cela étant, il est connu du document EP-A 169 156 une installation de manutention robotisée, destinée à équiper un magasin de stockage d'articles de types divers, soit pour autoriser le réapprovisionnement du stock, soit pour autoriser le regroupement d'articles prélevés dans le magasin de stockage pour former des lots d'articles constituant une commande.

Dans ce cas, le magasin est constitué par un ensemble de casiers modulaires, une pluralité d'allées le long desquelles sont disposés les casiers modulaires et une multitude de bacs de stock unitaire dans chacun desquels sont stockés lesdits articles par type et référence d'articles. De plus, les casiers sont formés par un assemblage de colonnes juxtaposées dans lesquelles sont placés et guidés de façon superposés lesdits bacs de stock unitaire.

Selon ce document, un ordinateur central gère une installation comprenant un ou plusieurs chariots automoteurs de manutention robotisée destinés à manutentionner lesdits bacs dans le magasin de stockage et à prélever des articles dans les bacs du magasin de stockage pour former les lots d'articles et rassembler lesdites commandes.

Chaque chariot automoteur comporte un châssis motorisé en translation, un ordinateur embarqué de dialogue avec l'ordinateur central ainsi qu'un meuble-magasin embarqué apte à recevoir les commandes.

Afin de pouvoir porter, soit les bacs de stock, soit les bacs de réception de commande, ledit châssis motorisé comporte une table de réception des bacs.

Par ailleurs, pour autoriser le prélèvement des articles des différents bacs et pour constituer ainsi les commandes, le châssis présente des moyens de prélèvement des bacs de stock unitaire et/ou de réception de commande, ainsi que des moyens de préhension susceptibles de prendre un des articles contenus dans le bac de stock et le placer dans un desdits bacs de réception de commande.

Cependant, la précision requise dans une telle installation demande une grande rigueur au niveau de la fabrication des différents éléments et oblige l'utilisation d'une technique sophistiquée. En effet, la bonne marche d'une telle installation dépend notamment de l'inertie du chariot, des différences qu'il peut exister entre les différentes réalisations des chariots, des différences de niveau du sol sur différents points du magasin, des défauts et des différences de construction des casiers du magasin de stockage etc. . . .

Cela étant, il est connu du document FR-A 2 128 281 un transtockeur prévu pour la déserte de magasins de stockage à rayonnages, équipé d'un dispositif de préhension à fourches se déplaçant horizontalement et verticalement devant les casiers d'un magasin.

Pour autoriser l'entrée des systèmes à fourches dans le rayonnage, cet appareil comporte un dispositif émetteur-récepteur qui n'autorise la manoeuvre que lorsque, simultanément, les émetteurs de signaux disposés latéralement, à une certaine distance l'un de l'autre et l'un des émetteurs de signaux supérieur ou supérieur se trouvent devant une des surfaces réceptrices pour signaux.

Un tel enseignement ne permet pas de pallier les inconvénients précités car on est en présence d'un ensemble "émetteur-récepteur d'autorisation" qui n'agit pas sur le positionnement du transtockeur. On se retrouve alors dans une situation identique à celle posée à la réalisation décrite dans le document EP-A 169 156 en ce qui concerne la précision requise et on obtiendra un positionnement très difficilement du fait de l'inertie des mécanismes mis en jeu, de la réalisation structurelle du mécanisme, des différences de niveau du sol sur différents points du magasin, des défauts et des différences de construction des casiers du magasin de stockage, etc. . . .

Le but principal de la présente invention est de présenter une installation de manutention robotisée destinée à équiper un magasin de stockage d'articles de types divers, tels que des articles de commerce ou des pièces détachées, dans le cadre d'une automatisation intégrale dudit magasin de stockage, et qui permette de pallier les inconvénients des systèmes connus.

L'installation de manutention robotisée de la présente invention permettra d'assurer deux fonctions essentielles rencontrées dans la gestion d'un stock, à savoir:
– le prélèvement par bac complet d'articles rangés dans les casiers du magasin de stockage pour notamment effectuer le réapprovisionnement automatique du magasin.
- le prélèvement d'articles unitairement placés préalablement dans les bacs complets d'articles, puis le tri de commandes à plusieurs articles.

Un des buts de la présente invention est de présenter une installation de manutention robotisée comportant un ou plusieurs chariots automoteurs de manutention robotisée gérés et commandés par un ordinateur central de gestion, susceptibles de travailler sur plusieurs commandes simultanément ce qui minimisera le nombre de manutentions.

En outre, un chariot automoteur de manutention robotisé de la présente installation pourra en cas de besoin suivre plusieurs commandes simultanément et assurer pendant son trajet le réapprovisionnement de différents articles du stock ce qui permettra également de minimiser les temps de manutention en réduisant le trajet.

Un autre but de la présente invention est de présenter une installation de manutention robotisée équipée de plusieurs chariots automoteurs de manutention susceptibles de travailler en coopération entre eux dans le magasin et ainsi de s'adapter au besoin du moment. On aura donc une installation de manutention modulaire qui répondra facilement aux variations de commandes à traiter selon certaines périodes et s'adaptera aux petites ou grosses unités en fonction de leur caractère spécifique.

Un autre des buts de la présente invention est de présenter une installation de manutention robotisée équipée de chariots automoteurs de manutention qui pourront etre facilement interchangeables en cas de défectuosité sur l'un d'eux. En effet, aucune adaptation mécanique du système n'est nécessaire pour intégrer un chariot supplémentaire ou de rechange, seul son adressage et son initialisation par l'ordinateur central devront etre prévus.

Par ailleurs, l'installation de manutention robotisée de la présente invention pourra s'adapter à la préhension d'articles unitairement de nature très différente, les articles étant placés dans des bacs rangés dans des casiers modulaires du magasin grace à l'utilisation d'outillages spécialisés; ce qui lui permettra de s'adapter notamment aux Sociétés de ventes par correspondance qui ont à traiter des articles très divers.

D'autres buts et avantages de la présente invention apparaitront au cours de la description qui va suivre qui n'est cependant donnée qu'à titre indicatif et qui n'a pas pour but de la limiter.

Selon la présente invention, l'installation de manutention robotisée, destinée à équiper un magasin de stockage d'articles de types divers, soit pour autoriser le réapprovisionnement du stock, soit pour autoriser le regroupement d'articles prélevés dans le magasin de stockage pour former des lots d'articles constituant une commande, ledit magasin présentant un ensemble de casiers modulaires, une pluralité d'allées le long desquelles sont disposés les casiers modulaires, et une multitude de bacs de stock unitaire dans chacun desquels sont stockés lesdits articles par type et référence d'articles, lesdits casiers étant formés par un assemblage de colonnes juxtaposées dans lesquelles sont placés et guidés de façon superposée lesdits bacs de stock unitaire, ladite installation comportant au moins:
– un ordinateur central de gestion de l'installation et desdites commandes,
– un ou plusieurs chariots automoteurs de manutention robotisée destinés à manutentionner lesdits bacs dans le magasin de stockage et à prélever des articles dans les bacs du magasin de stockage pour former les lots d'articles et rassembler lesdites commandes, ledit chariot automoteur comportant au moins:
– un châssis motorisé présentant en outre des moyens de translation aptes à le déplacer dans les allées du magasin de stockage devant lesdits casiers modulaires,
– un ordinateur embarqué apte à dialoguer avec l'ordinateur central pour gérer les déplacements et les arrêts du chariot dans le magasin de stockage et pour contrôler ses mouvements de déplacement,
– un meuble-magasin embarqué formé par un assemblage de colonnes aptes à recevoir et à maintenir de façon superposée des bacs de réception de commande, ledit châssis motorisé comportant au moins:
– une table de réception des bacs aptes à porter au moins un bac de stock et/ou un bac de réception de commande,
– des moyens de prélèvement des bacs susceptibles soit de déplacer un bac de stock unitaire entre les casiers du magasin de stockage et ladite table de réception des bacs, soit de déplacer un bac de réception de commande entre le meuble-magasin embarqué et ladite table de réception des bacs.

– des moyens de préhension susceptibles de prendre un des articles contenu dans le bac de stock placé sur la table de réception pour le déposer ensuite dans un bac de réception de commande, est caractérisée par le fait que ladite table présente des moyens moteur de translation afin qu'elle puisse au moins se déplacer linéairement légèrement en plus ou en moins indépendamment du châssis motorisé, soit devant les casiers du magasin de stockage, soit devant au moins une des colonnes du meuble-magasin embarqué, et que ladite table présente en outre des moyens de recentrage agissant sur la table de réception des bacs par l'intermédiaire desdits moyens moteur de translation aptes à positionner précisément en abscisse et en ordonnée les moyens de prélèvement devant un bac contenu dans les casiers du magasin de stockage.

L'invention sera mieux comprise à la lecture de la description suivante accompagnée de dessins en annexe parmi lesquels:

La figure 1 représente une vue en perspective de l'installation de manutention robotisée de la présente invention et qui montre plusieurs chariots automoteurs de manutention opérant dans un magasin de stockage.

La figure 2 schématise un chariot automoteur de l'invention dans une version appropriée su réapprovisionnement de stocks.

La figure 3 schématise un chariot automoteur de la présente invention dans une version appropriée au prélèvement unitaire d'articles dans les bacs et au tri de commandes à plusieurs articles.

La figure 4 représente une vue de face d'un chariot automoteur de manutention robotisée de la présente invention équipé d'un ensemble de prélèvement d'articles.

La figure 5 représente en vue de dessus du chariot automoteur de la présente invention représenté à la figure 4.

La figure 6 représente une vue de face partielle du chariot représenté en figure 4 montrant en détail la table de réception du bac, les moyens de prélèvement du bac, et les moyens de recentrage de la table de réception des bacs.

Les figures 7a et 7b montrent respectivement en vue de face les détails de la présente invention représentés à la figure 6 selon les flèches VIIa–VIIa et la flèche VIIb.

La figure 8 représente une vue de dessus du détail du chariot automoteur de la présente invention représenté aux figures 6 et 7.

La figure 9 illustre en vue de face un détail du chariot automoteur représenté à la figure 4 montrant les moyens de préhension des articles.

La figure 10 illustre en vue du côté les moyens de préhension représentés à la figure 9.

Les figures 11a et 11b schématisent les différentes phases de fonctionnement de l'outil des moyens de préhension à molette cylindrique de la figure 9.

La figure 12 représente un détail des moyens de recentrage réalisés selon un premier mode de réalisation.

Les figures 13a et 13b représentent un détail des moyens de recentrage de la présente invention réalisés selon un second mode de réalisation.

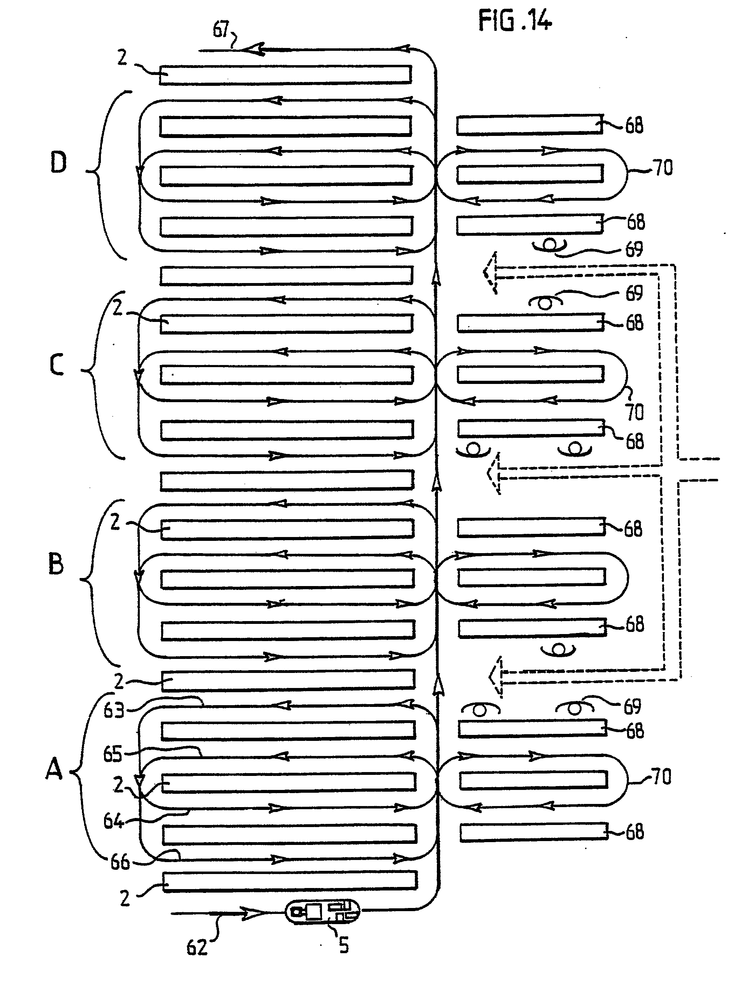

Enfin la figure 14 représente de façon schématique un exemple de parcours d'un chariot automoteur dans le magasin de stockage automatisé.

La présente invention vise une installation de manutention robotisée destinée à équiper un magasin de stockage d'articles de types divers regroupés par références dans des bacs.

Il est préalablement à remarquer que les appellations "articles" et "bac" sont à prendre au sens large et générique du terme. Par "article", il faut entendre tout objet, pièce ou composant individuel pouvant être manipulé séparément. Dans l'appellation bac, il faut inclure tout type de contenant pouvant etre manipulé et présentant des formes diverses telles que des bacs sensiblement parallélépipédiques ou des trémies ou des distributeurs.

L'invention ayant été notamment développée pour l'industrie de la vente par correspondance, l'exemple de réalisation décrit par la suite concerne plus spécialement le réapprovisionnement général des stocks et la préparation de commandes par regroupement d'articles à expédier pour former des lots d'articles constituant une commande. Toutefois, il peut s'agir de commandes qui ne concernent qu'un seul article ou plusieurs articles.

Néanmoins, l'invention trouvera un champ d'application beaucoup plus large dans l'industrie où l'installation de manutention robotisée équipée de chariots automoteurs contrôlés pourra être utilisée dans des magasins de pièces détachées ou autres. De plus, la nature des pièces stockées importe peu pourvu qu'elles puissent être conditionnées dans un système de rangement modulaire génériquement appelé bacs.

L'installation de manutention robotisée de la présente invention est en fait un système de gestion du fonctionnement d'un magasin de stockage d'articles entièrement automatisé piloté par un ordinateur central. Par un dialogue qui peut être permanent ou intermitent avec l'ordinateur central, le ou les chariots automoteurs de la présente invention se verront définir les tâches qui lui incombent.

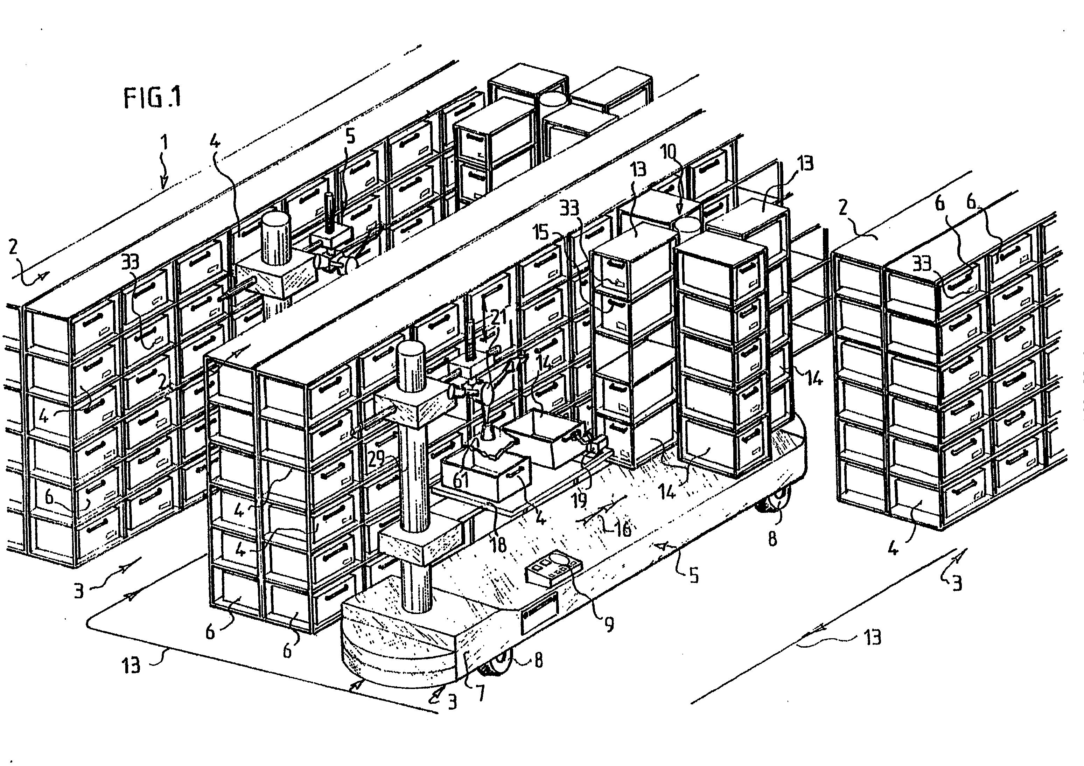

La figure 1 schématise un magasin de stockage d'articles de types divers regroupés par type et par référence dans des bacs. Ce regroupement par références identiques est nécessité étant donné qu'il s'agit d'un système informatisé et par conséquent, c'est par codage que les articles sont reconnus au niveau de l'ordinateur.

Plus précisément, le magasin de stockage 1 présente un ensemble de casiers modulaires 2, une pluralité d'allées 3 le long desquelles sont disposés les casiers modulaires 2, et une multitude de bacs de stock unitaire 4 dans chacun desquels sont stockés les dits articles par type et référence.

La configuration des bacs dépend essentiellement de la nature des articles contenus. Généralement, le bac parallélépipédique est adapté au produit conditionné dans des boites, la trémie est adaptée aux articles souples disposés en vrac et le distributeur concerne des produits généralement de petites dimensions dont la préhension est délicate. Toutefois, d'autres modes de rangement pourraient être envisagés sans pour autant sortir du cadre de la présente invention.

Les casiers modulaires 2 bordant les allées 3 du magasin à l'intérieur desquelles peuvent librement circuler des chariots automoteurs 5 de manutention robotisée,sont formés par un assemblage de colonnes 6 juxtaposées dans lesquelles sont placés et guidés de façon superposée les dits bacs de stock unitaire 4 de sorte qu'ils puissent être facilement extraits et manipulés par les chariots automoteurs 5.

L'installation de manutention de l'invention comporte essentiellement un ordinateur central, non représenté sur les figures, et un ou plusieurs chariots automoteurs 5 de manutention robotisé.

L'ordinateur central est prévu pour assurer la gestion de l'installation et des dites commandes d'articles à regrouper. A cet égard, il est capable selon les commandes clients qui lui parviennent au fur et à mesure de sélectionner le nombre de chariots automoteurs nécessaires et leur équipement puis d'organiser la mission de travail de chaque chariot automoteur. Pour cela, il a en mémoire en permanence l'état du stock en quantité et en configuration, ainsi que le plan de répartition des articles et des bacs de stock dans le dit magasin de stockage.

La mission déléguée par l'ordinateur central à un chariot automoteur de manutention 5, selon l'équipement et la possibilité du dit chariot sélectionné sera généralement soit d'effectuer un cycle de réapprovisionnement du stock soit d'effectuer un cycle de constitution de plusieurs commandes par prélèvement, tri et regroupements d'articles issus du magasin de stockage pour former des lots d'articles constituant les dites commandes, soit encore un mélange de ces deux cycles.

A cet effet, les chariots automoteurs 5 de manutention robotisés sont susceptibles de manutentionner les dits bacs de stock unitaire 4 dans le magasin de stockage 1 et à prélever des articles dans les bacs 4 du magasin 1 pour former les lots d'articles et rassembler les commandes.

Un des avantages de l'invention réside dans le fait que chaque chariot automoteur 5 de manutention robotisé est autonome et l'installation de manutention pourra en faire circuler un nombre variable dans le magasin de stockage selon l'importance des besoins. Ainsi, on aura une installation tout à fait modulaire et non dépendante d'équipements mobiles placés à poste fixe.

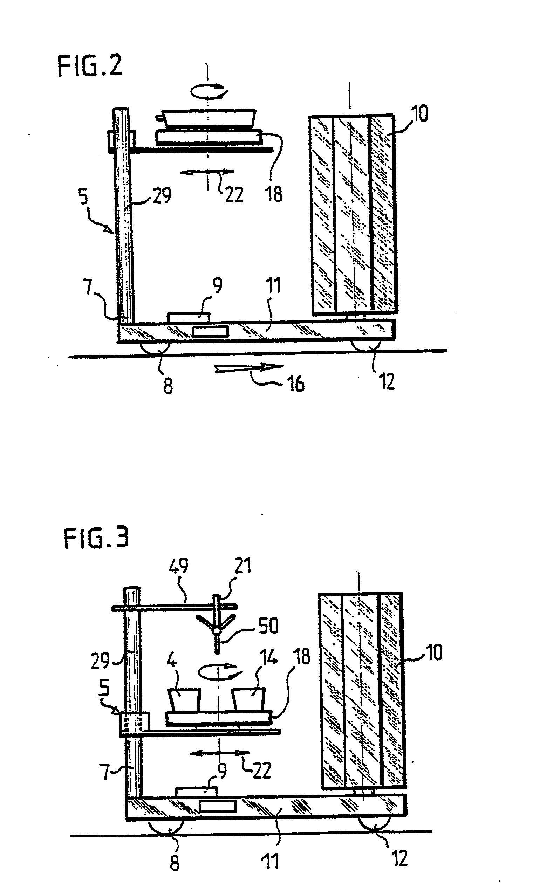

Chaque chariot automoteur 5 comporte essentiellement un châssis motorisé 7, un ordinateur embarqué 9 et un meuble magasin embarqué 10. Cette configuration est commune aux deux versions de chariot montrées respectivement aux figures 2 et 3 qui autorisent l'une le réapprovisionnement des stocks, l'autre la préparation des commandes.

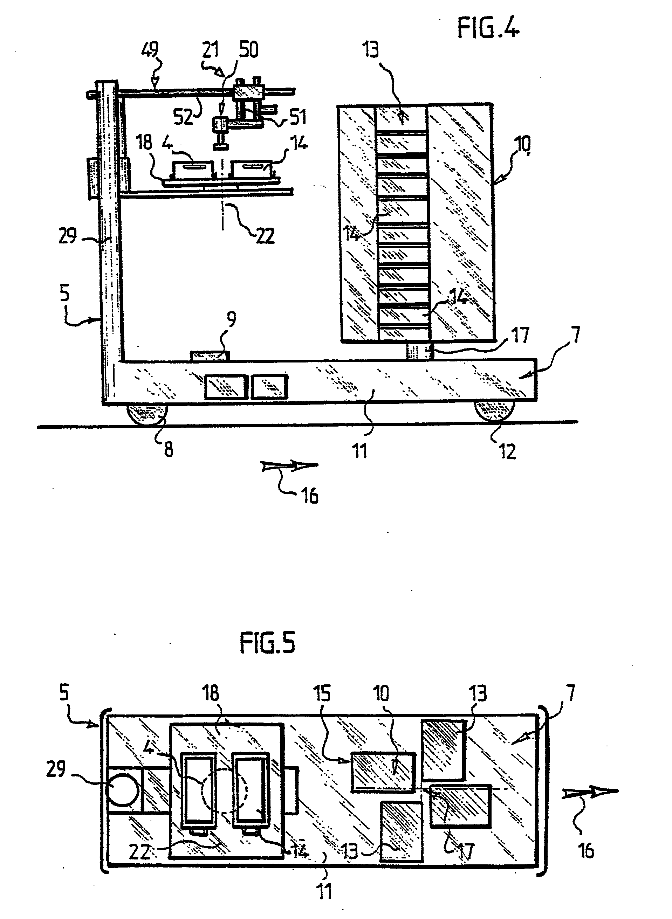

Le chassis motorisé 7 présente en outre des moyens de translation 8 aptes à le déplacer dans les allées 3 du magasin de stockage 1 devant les dits casiers modulaires 2. Comme illustré aux figures 2 à 4, le châssis motorisé 7 comporte un bâti principal 11 adapté à la largeur des allées 3, monté sur roues 12 commandées par les dits moyens de translation 8.

Ces moyens 8 pourront être notamment constitués par un ou plusieurs motoréducteurs à alimentation en courant continu contrôlés par l'intermédiaire d'un dispositif de suivi d'un fil conducteur enterré, schématisé à la figure 1 par les lignes fléchées 13. Cette technique est généralement connue par l'Homme de l'Art sous l'appellation technique de "chariot filoguidé".

A cet égard, le châssis motorisé 7 présentera une antenne de positionnement, non représentée, placée sous le châssis 7 permettant de reconnaitre et de suivre le dit fil enterré sensiblement dans l'axe de chaque allée 3 du magasin de stockage 1. La dite antenne de positionnement sera apte à reconnaitre une fréquence émise, chaque allée étant assujettie à une fréquence différente.

En outre, le châssis motorisé 7 comportera également un lecteur de code de casiers, non représenté sur les figures, placé sensiblement au niveau du sol afin de permettre la reconnaissance des colonnes 4 des différents casiers 2.

A cet égard, à l'aplomb de chaque colonne 4 sera apposée une étiquette de repérage notamment numérique. Dans chaque allée 3 les colonnes 4 des casiers 2 seront avantageusement repérées et ordonnées par une suite de nombres croissante du début de l'allée jusqu'à la fin. Ce mode de repérage sera intéressant au niveau du codage assimilé par l'ordinateur car il enverra le chariot automoteur dans une allée de fréquence déterminée, jusqu'à la n-ième colonne choisie.

De plus, ce mode de repérage ordonné pourra avantageusement faire ralentir le chariot automoteur 5 à l'approche de la n-ième colonne. Par exemple, si le chariot automoteur est envoyé à la douzième colonne, il ralentira en passant en petite vitesse à la lecture de la dixième colonne afin de se prépositionner en petite vitesse devant la colonne choisie.

Dans un mode de réalisation avantageux, le lecteur de code de casiers sera formé par un système de lecture de code à barres dont la technique est connue de l'Homme de l'Art considéré.

En ce qui concerne l'ordinateur embarqué 9, c'est-à-dire fixé sur le chariot 5 et mobile avec lui lors de ses déplacements, il sera apte à dialoguer avec l'ordinateur central, qui lui est à poste fixe, pour gérer les déplacements et les arrêts du chariot automoteur 5 dans le magasin de stockage 1 et pour contrôler ses mouvements de déplacement.

Plus précisément, l'ordinateur embarqué 9 sur chaque chariot automoteur comporte essentiellement :
- un circuit de dialogue avec l'ordinateur central de gestion de l'installation pour transmettre des données, la transmission de données s'effectuant soit par voie hertzienne, soit par antenne et capteur sans contact fonctionnant par effet magnétique ou/et inductif et disposés à endroits repérés tout au long du trajet du chariot, soit éventuellement par contact frottant et glissant avec un fil électrique placé tout au long du trajet du chariot 5.
- un circuit de commande numérique et une logique de traitement pour commander et contrôler les positionnements des organes de prélèvement et de préhension qui seront décrits dans la suite de la description,
- un microcalculateur qui assure la commande et le guidage des déplacements du châssis motorisé dans les allées du magasin, qui pilote notamment le dispositif de suivi de fil conducteur précité contrôlant les moyens de translation 8 du chariot automoteur 5 dans le cas de la réalisation d'un chariot filoguidé,
- un mini-ordinateur dans lequel sont mémorisés en outre la mission que doit effectuer le chariot automoteur 5, la configuration et le plan du magasin de stockage 1, ainsi que la configuration et l'équipement du chariot automoteur 5, ce miniordinateur assurant notamment le contrôle de tous les mouvements du chariot automoteur et organise le travail du dit chariot pendant toute sa mission sous le contrôle de l'ordinateur central de gestion.

En ce qui concerne la réalisation technologique des ordinateurs embarqués, il sera utilisé des techniques électroniques à microprocesseur et autres couramment utilisées et connues par l'Homme de l'Art du domaine considéré.

En outre, selon la présente invention, pour minimiser les temps de manutention en réduisant les trajets, pour former des lots d'articles constituant une commande en suivant plusieurs commandes simultanément, ou pour assurer durant son trajet le réapprovisionnement de différents articles du stock, le chariot automoteur 5 comporte avantageusement un meuble-magasin embarqué 10 qui constitue un petit magasin tampon placé à même le chariot 5 et se déplaçant avec lui pendant tous ses trajets. Ainsi, grâce à ce meuble-magasin embarqué, sur le chariot automoteur on effectuera des stockages temporaires et des tris permettant de former les différents lots d'articles et de constituer les commandes traitées simultanément ce durant toute la mission conférée par l'ordinateur central.

A cet égard, comme le montrent notamment les figures 1 à 5, le dit meuble-magasin embarqué 10 est formé par un assemblage de colonnes 13 aptes à recevoir et à maintenir de façon superposée des bacs de réception de commandes 14.

Plus précisément, le meuble-magasin embarqué 10 se présente sous la forme d'un meuble tournant, porté de façon amovible par le chariot automoteur 5, constitué de plusieurs colonnes 13 de bacs de commande 14 superposés répartis sur le pourtour du meuble. Ce meuble-magasin 10 est entraîné en rotation par un organe moteur, non représenté, contrôlé et commandé par l'ordinateur embarqué de façon à présenter la face avant 15 de la colonne 13 des bacs choisis 14 face aux moyens de prélèvement et de préhension, perpendiculairement à la direction de déplacement du chariot automoteur 5, déplacement repéré par les flèches 16 sur les figures.

Dans un mode préférentiel de réalisation du meuble-magasin 10 de la présente invention, ce dernier sera constitué par quatre colonnes 13 réparties et montées en rotation autour d'un arbre vertical 17. Cet arbre sera entraîné par un motoréducteur, notamment alimenté en courant continu, qui permettra un arrêt précis du meuble tournant notamment tous les 90°. Ces techniques sont traditionnelles et généralement connues de l'Homme de l'Art.

Selon la dimension des bacs qui peuvent être de dimension quelconque, on disposera autant de bacs que nécessaire pour optimaliser la fonction magasin embarqué. Dans le cas précis de la présente application, les bacs présenteront 600 mm de longueur, 400 mm de largeur et 150 à 200 mm de hauteur et on disposera de 40 à 120 bacs par meuble 10, toutefois ces dispositions ne sont nullement limitatives.

Selon la présente invention, pour pouvoir prélever et manipuler les bacs et de plus appréhender les articles qui y sont logés, le tout d'une façon automatique sans intervention manuelle, le dit châssis motorisé 7 comporte essentiellement une table de réception 18 des bacs, des moyens de prélèvement 19 des bacs, des moyens de recentrage 20 de la table de réception 18, ainsi que des moyens de préhension 21 des articles.

La table de réception 18 est apte à porter au moins un bac de stock 4 et/ou un bac de réception de commande 14. En outre, elle est au moins mobile en translation légèrement en plus ou en moins comme le montrent les flèches 22 sur les figures, dans le sens de la direction 16 du chariot automoteur 5 dans les allées du magasin de stockage.

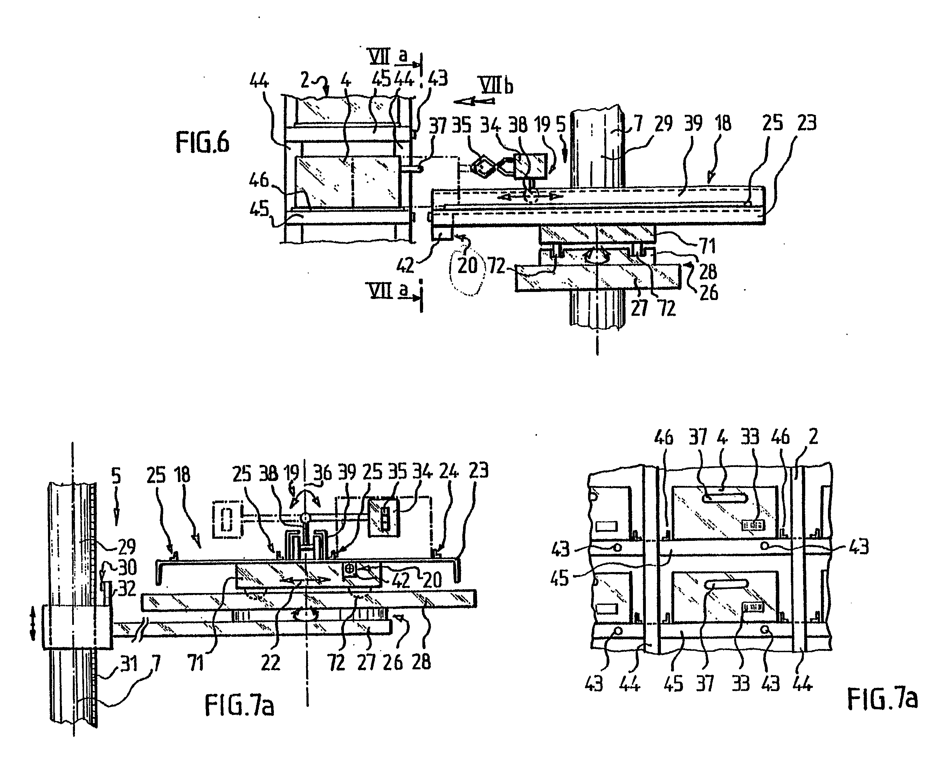

Plus précisément, comme le montrent les figures 6, 7a et 8, la table de réception 18 des bacs comporte :
- un plateau supérieur 23 de réception des bacs, solidaire d'un chariot 71 de translation de table, présentant des moyens de guidage 24 des bacs aptes à diriger et à faciliter le positionnement des bacs de stock 4 et/ou des bacs de réception de commande 14 lors des mouvements de transfert des bacs manipulés par les dits moyens de prélèvement 19.
- un chariot à tourelle 26 essentiellement constitué par une embase 27 solidaire du dit châssis motorisé 7 et par une tourelle 28, libre en rotation, portée et guidée par la dite embase 27, présentant un chemin de roulement 72 sur lequel se déplace le dit chariot de translation de table 71.

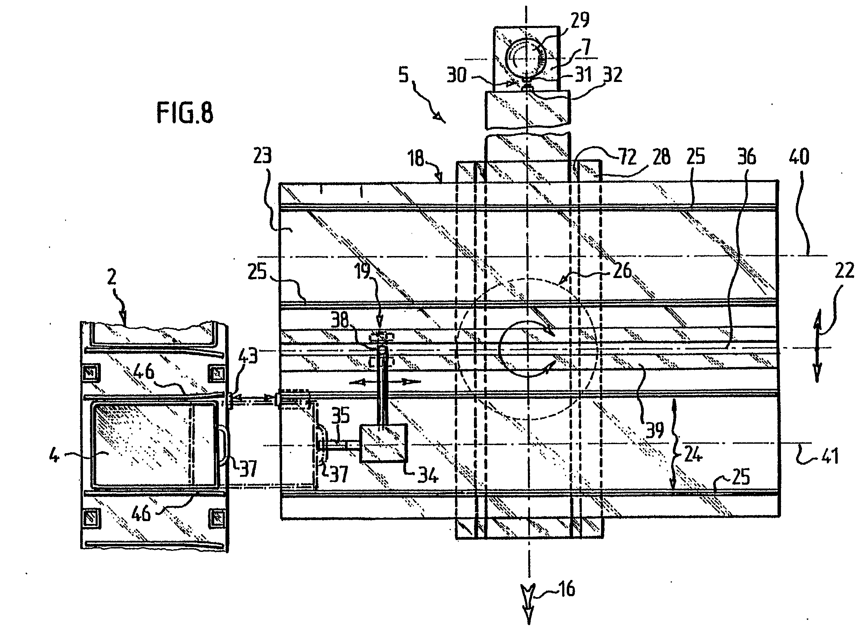

Les moyens de guidage 24 seront avantageusement constitués par des glissières 25 fixées sur le plateau supérieur 23 dont l'entraxe correspond sensiblement aux dimensions du fond extérieur des bacs 4 et/ou 14 à prélever et disposées de façon divergente, comme le montre notamment la figure 8, pour favoriser l'introduction des bacs 4 ou 14 entre celles-ci.

Le chariot de translation 71 est notamment fixé sous le plateau supérieur 23 et présente un organe moteur, non représenté, apte à déplacer linéairement à faible vitesse la table de réception des bacs 18 dans une direction repérée 22 définie par le dit chemin de roulement 72 de la dite tourelle 28.

L'organe moteur entrainant ce chariot 71 est notamment constitué par un groupe motoréducteur alimenté en courant continu assurant un déplacement à vitesse lente contrôlable de l'ensemble de la table de réception 18 en vue de la positionner.

De plus, le guidage du chariot pendant sa translation se fera par des techniques connues telles que des galets roulant dans des rainures ou autres.

Par ailleurs, le chariot à tourelle 26 présente un organe moteur, non représenté, entrainant en rotation la tourelle 28 et par conséquence la table de réception 18 par rapport à l'embase 27 afin de faire pivoter horizontalement la table de réception 18 des bacs pour au moins la disposer soit face aux bacs de stock 4 contenus dans les casiers modulaires 2 du magasin de stockage 1 soit face aux bacs de réception de commande 14 contenus dans le meuble-magasin embarqué 10.

Cet autre organe moteur sera également constitué par exemple par un groupe motoréducteur alimenté en courant continu et sera susceptible de positionner et d'arrêter la table notamment tous les 90° d'angle ceci des techniques connues de l'Homme de l'Art.

Il est à noter que pour supporter la table de réception 18 et pour la déplacer verticalement de haut en bas afin de la placer à différentes hauteurs des casiers 2 du magasin de stockage 1 ou des colonnes 13 du meuble-magasin embarqué 10, le châssis motorisé 7 comportera avantageusement une colonne de guidage 29, solidaire du bâti 11, placée sensiblement verticalement le long de laquelle pourra se mouvoir de bas en haut et inversement la table de réception 18 des bacs.

Ce système de déplacement et de guidage sera réalisé par des techniques connues de l'Homme de l'Art et pourra notamment être constitué par un système à crémaillère ou un système entrainé par chaine et pignons commandé par un organe moteur qui sera avantageusement du même type que ceux utilisés jusqu'à maintenant.

De plus, la colonne de guidage 29 sera équipée d'un capteur numérique de hauteur 30 qui comme le montre schématiquement la figure 7a est constitué par un axe numérisé 31 placé verticalement sur toute la hauteur de la colonne de guidage 29 et un codeur de lecture de l'axe 32 apte à délivrer une information électrique fonction de la hauteur de la table de réception 18 des bacs par rapport à un niveau de référence préétabli qui sera généralement le niveau zéro du sol. Cette technique est traditionnellement utilisée par l'Homme de l'Art, par exemple dans l'équipement de machines-outils et ce dispositif permet de connaitre précisément la valeur du déplacement.

Il est à remarquer que grâce à ce capteur de hauteur 30 dont les informations seront envoyées vers l'ordinateur embarqué 9, l'installation de manutention robotisée de la présente invention connaitra d'une part la position en hauteur de la table 18 et pourra lui commander des déplacements préétablis par le programme de gestion centrale. Les informations délivrées par ce capteur 30 seront traitées par le circuit de commande numérique et la logique de traitement du dit ordinateur embarqué.

Comme le montre particulièrement la figure 7b, chaque bac de stock unitaire 4, comme d'ailleurs chaque bac de commande 14, porte une étiquette 33 d'identification du bac. Cette étiquette portera un repère, notamment un repère du type code à barres, qui sera connu de l'ordinateur central et de l'ordinateur embarqué. Grâce à ce mode de repérage, l'installation de la présente invention connaitra le contenu des bacs, contenu qui aura été préalablement introduit dans la mémoire du système central au moment du remplissage des bacs.

De plus, la table de réception des bacs 18 comportera un lecteur de code bacs, non représenté sur les figures, permettant d'identifier le bac à prélever et de vérifier la concordance effective du bac lu et du bac prêt à manipuler préchoisi par l'ordinateur central et/ou embarqué.

Enfin, le plateau supérieur 23 de la table de réception 18, dans un mode de réalisation avantageux, comportera des moyens de pesée, non représentés, du bac de stock 4 prélevé dans le magasin de stockage 1 permettant ainsi d'effectuer une double pesée avant et après préhension d'un article dans le bac 4 afin de vérifier la concordance effective du poids de l'article prélevé et celui théorique de l'article préchoisi par l'ordinateur central et/ou l'ordinateur embarqué.

Grâce à ces dispositifs de contrôle tels que le lecteur de code bac, les moyens de double pesée, on vérifiera le déroulement du cycle de manutention effectué par le chariot automoteur 5 et on s'affranchira d'éventuelles anomalies qui pourraient se produire. Ainsi, on aura un fonctionnement fiable et non aléatoire.

En ce qui concerne les moyens de prélèvement 19 des bacs, ils sont susceptibles, selon l'invention, soit de déplacer un bac de stock unitaire 4 entre les casiers 2 du magasin de stockage 1 et la dite table de réception 18 des bacs, soit de déplacer un bac de stock unitaire 4 entre la dite table 18 et le meuble-magasin embarqué 10, soit encore de déplacer un bac de réception de commande 14 entre le meuble-magasin embarqué 10 et la même table de réception 18.

Plus précisément, comme le montrent notamment les figures 6, 7a et 8, les moyens de prélèvement des bacs 19 sont constitués par un dispositif d'extraction 34, guidé et porté par la table de réception 18 des bacs, présentant des moyens d'accrochage 35 amovibles avec le bac 4 ou 14 à manipuler.

Le dispositif 34 sera avantageusement animé d'un mouvement longitudinal par rapport à l'axe principal 36 de la table de réception 18 et sera susceptible d'agripper la face latérale avant du bac choisi 4 ou 14 pour le prélever soit du magasin de stock 1 soit du meuble-magasin embarqué 10 et le faire glisser vers la dite table de réception 18 et/ou inversement de le repousser et de le replacer dans le magasin de stock 1 ou le meuble-magasin embarqué 10.

A cet égard, il sera avantageux que les faces frontales des bacs de stock 4 ou de réception de commande 14 présentent la même configuration tout au moins en ce qui concerne la zone de préhension du bac par le dispositif d'extraction 34.

Selon un mode préférentiel de la présente invention, cette zone de préhension sera constituée par une poignée 37 et le dispositif d'extraction 34 sera constitué par un extracteur à pince présentant une pince 35 portée par un chariot 38 monté à coulissement dans un rail de guidage 39 placé longitudinalement par rapport à l'axe principal 36 de la table de réception 18; la dite pince étant apte à agripper la poignée 37 fixée sur la face frontale des bacs 4 ou 14.

En outre, le dit extracteur-pince 34 sera avantageusement articulé et déporté par rapport au rail de guidage 39 pour autoriser deux axes, repérés 40 et 41 à la figure 8, de mouvement parallèle à l'axe principal 36 de la table 18.

De par cette disposition, on pourra sur la table de réception du bac 18 placer côte à côte, par l'intermédiaire du même dispositif d'extraction 34, deux bacs, l'un 4 étant extrait des casiers du magasin de stockage 1, l'autre 14 étant lui extrait du meuble-magasin embarqué 10. Cette disposition est notamment illustrée aux figures 3 à 5.

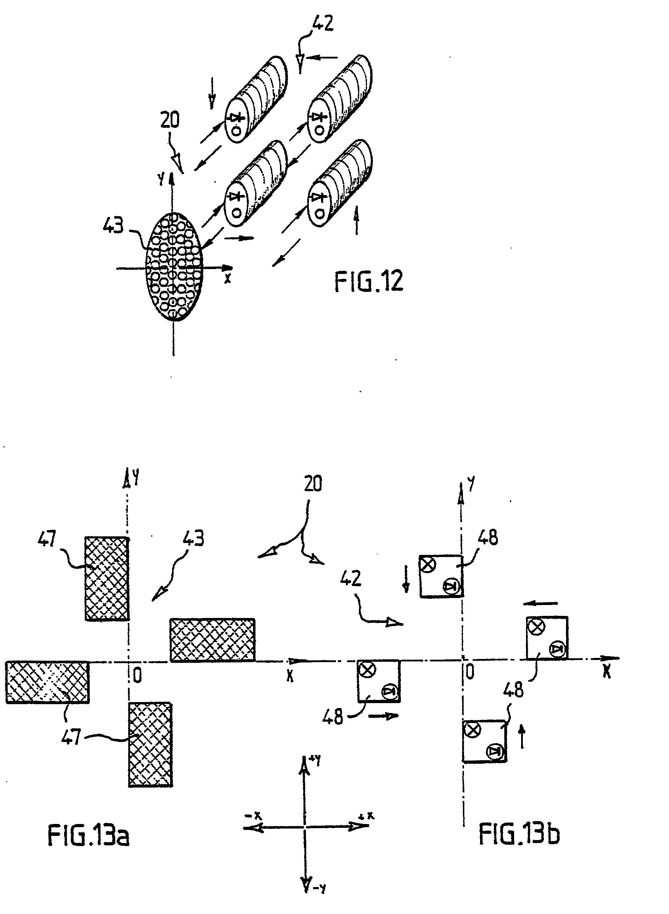

Par ailleurs, selon la présente invention, pour positionner précisément en abscisse et ordonnée les moyens de prélèvement 19 devant un bac 4 choisi par l'installation de manutention et contenu dans les casiers 2 du magasin de stockage 1, le châssis motorisé 7 présentera des moyens de recentrage 20 de la table de réception 18 des bacs, ces moyens étant notamment illustrés aux figures 6 à 8 et leur principe de fonctionnement aux figures 12 et 13.

Plus précisément, les moyens de recentrage 20 comportent un dispositif de visée 42, permettant le positionnement en abscisse et en ordonnée, formé par un ou plusieurs capteurs de positionnement portés par ladite table de réception 18 et par une multitude de réflecteurs 43 portés par les casiers 2 du magasin de stockage 1 et positionnés précisément à l'aplomb de chaque bac de stock 4.

A cet effet, la figure 7 montre une vue de face d'un casier 2 du magasin de stockage 1 constitué par des montants supérieurs 44 et par des lisses horizontales 45 espacées de telle manière que les bacs de stock 4 puissent y prendre place. Dans un mode de réalisation avantageux, les réflecteurs 43 seront positionnés précisément sur les lisses 45.

Par ailleurs pour positionner relativement les bacs 44 par rapport aux réflecteurs 43, les bacs seront avantageusement placés entre des glissières 46 du même type que celles décrites précédemment et constituant les moyens de guidage 24 de la table de réception 18. Ces moyens de recentrage 20 agiront, via l'ordinateur embarqué, sur les organes moteur décrits précédemment permettant de monter ou baisser la table de réception 18 et/ou d'avancer ou de reculer cette dernière dans l'axe de déplacement du chariot automoteur 5.

Ainsi, après un prépositionnement défini par l'arrêt des moyens de translation 8 du châssis motorisé 7 devant la colonne choisie 6 du magasin 1 d'une part, et d'autre part par un prépositionnement en hauteur de la table 18 par l'intermédiaire du capteur numérique de hauteur 30, on positionnera précisément la table 18 en abscisse et en ordonnée de façon à ce qu'il n'y ait pas de différence de niveau entre cette dernière et le plan supérieur des lisses 45 des casiers 2 et de façon à aligner sensiblement les systèmes de glissière 25 et 46 de la table de réception des bacs 18 et du magasin de stockage 1. Ce prépositionnement et ce recentrage permettent de s'affranchir de l'inertie du chariot automoteur, des différences qu'il peut exister entre les différentes réalisations des chariots automoteurs, des différences de niveau du sol aux différents points du magasin, les défauts et les différences de construction des casiers du magasin de stockage etc ...

Il est à remarquer que ce dispositif de recentrage 20 et de visée 42 pourraient être appliqués également pour positionner précisément en abscisse et en ordonnée la table de réception 18 par rapport aux bacs 14 du meuble-magasin embarqué 10. Toutefois, ce dispositif n'est pas toujours nécessaire car la précision du prépositionnement est généralement suffisante.

A cet égard, le meuble-magasin embarqué 10 présente également des glissières de guidage, non représentées sur les figures, du même type que celles utilisées dans le magasin de stockage 1 et sur la table de réception des bacs 18.

Par ailleurs, il est à noter que les capteurs de positionnement 42 du dispositif de visée 20 sont organisés pour délivrer quatre signaux de sortie fonction des quatre quadrants définis par deux axes orthogonaux, abscisse et ordonnée, complétés par un signal de présence d'un réflecteur 43 face au dispositif de visée 20. Ceci est notamment montré aux figures 12 et 13 qui présentent deux modes de réalisation possibles.

A la figure 12, les capteurs de positionnement 42 sont constitués par quatre dispositifs émetteur-récepteur opto-électriques qui permettent chacun l'émission d'un signal lumineux ou infra-rouge et de détecter la réémission de ce signal réfléchi par le réflecteur 43. Ainsi, quand le dispositif de visée 20 sera face à un réflecteur 43, selon l'émetteur récepteur activé, on connaîtra la position du mobile par rapport au réflecteur 43 dans un des quatre quadrants et on agira sur les mouvements de translation ou d'élévation de la table de réception des bacs 18 afin que plus aucun des quatre capteurs ne soit activé. Dans ce cas, le réflecteur sera centré sensiblement sur l'intersection des deux axes abscisse et ordonnée.

La figure 13 montre un deuxième type de réalisation par lequel le réflecteur 43, schématisé à la figure 13a, est constitué par une disposition orthogonale de quatre réflecteurs élémentaires 47 et les capteurs de positionnement 42, montrés à la figure 13b, sont constitués par quatre dispositifs émetteur-récepteur repérés 48, analogues aux précédents.

Dans ce mode de réalisation, on agit également sur les mouvements de montée, de descente et de translation de la table de réception 18 mais la fonction est inverse; en effet, on aura un positionnement correct quand les quatre capteurs 48 seront face au réflecteur unitaire 47 et donc activés.

Ces deux exemples de dispositifs de positionnement sont non limitatifs et il pourrait être utilisé d'autres systèmes de recentrage sans pour autant sortir du cadre de la présente invention.

Enfin, selon la présente invention, pour prendre un des articles contenus dans le bac de stock 4 ainsi placé sur la table de réception 18, le châssis motorisé 7 comporte des moyens de préhension 21 susceptibles de prendre un article en vue de le déposer ensuite dans le bac de réception de commande 14.

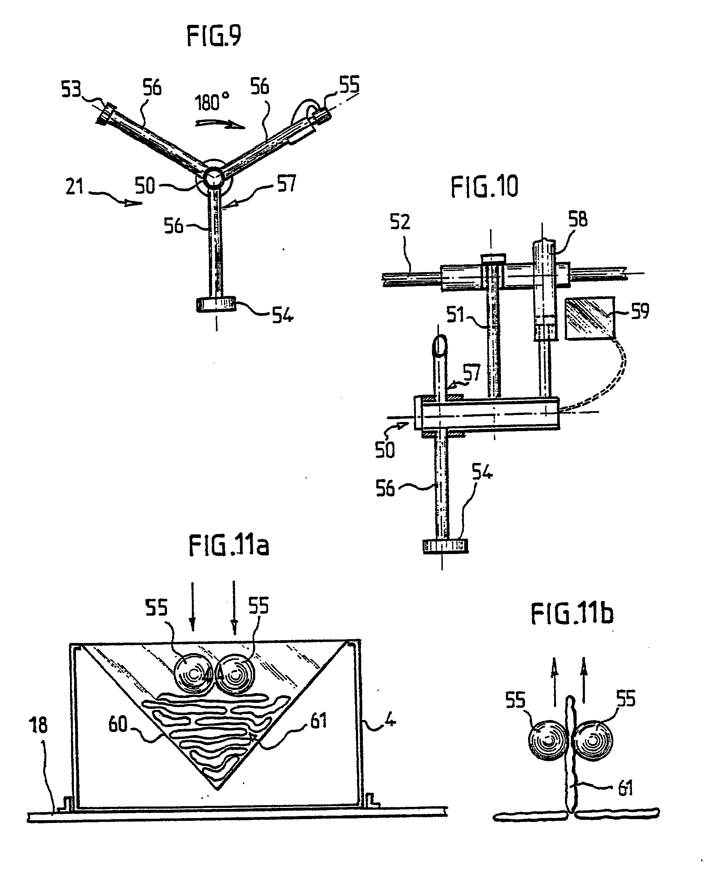

Ces moyens de préhension sont notamment illustrés aux figures 1, 3, 4 et détaillés aux figures 9 à 11.

Plus particulièrement, les moyens de préhension 21 sont constitués par un ensemble manipulateur 49, apte à plonger dans les différents bacs de stock 4 pour y prélever un article, monté sur un bras support 51 mobile verticalement et qui est lui-même monté sur une potence support manipulateur 52 porté par le châssis motorisé 7 du chariot automoteur 5, et plus précisément actionné et guidé par la colonne de guidage 29 le long de laquelle les dits moyens de préhension des articles 21 pourront se mouvoir de bas en haut et inversement. Il est à remarquer que, avantageusement, l'ensemble manipulateur 49 suivra les mouvements verticaux de la table de réception 18 des bacs pour disposer d'une position relative constante entre eux.

Par contre, la tête de prélèvement 50 comprend un bras 51 de support mobile verticalement afin de permettre à la tête de plonger dans les bacs 4 disposés sur la table de réception 18 pour y prélever un article.

Etant donné la nature très diverse que peuvent revêtir les articles stockés, la tête de prélèvement 50 peut comprendre différents outils de préhension qui seront actionnés selon les besoins. Dans l'exemple illustré aux figures 9 et 10, il a été considéré le cas de trois outils différents de préhension. Ces outils 53, 54 et 55, sont disposés à l'extrémité des branches 56 d'une étoile 57.

L'étoile 57 est mobile en rotation, ainsi, il est possible de placer l'un des outils 53, 54 ou 55 à la verticale afin que ce dernier soit opérationnel. L'étoile 57 fixée au bout du bras 51 peut être manoeuvrée verticalement à l'aide d'un vérin 58 dont la course permet à l'étoile 57 de plonger dans le bac de stockage 4 placé sur la table de réception 18.

Dans l'exemple illustré à la figure 9, les outils de préhension se composent d'une petite ventouse 53, d'une grande ventouse 54 et de molettes cylindriques 55. Le principe de fonctionnement des ventouses 53 et 54 est bien connu, il s'agit de créer une dépression interne ainsi fait que l'article reste plaqué contre la ventouse. Eventuellement, la ventouse 54 par exemple pourra être équipée d'un dispositif de rotation 0-90° pour exécuter notamment un rangement de l'article prélevé.

La dépression créée dans la ventouse opérationnelle est réalisée par une turbine 59 illustrée à la figure 10, reliée à l'étoile 57 qui présente à cet effet des branches creuses et un distributeur pour mettre en communication la branche creuse 56 de la ventouse opérationnelle avec la turbine.

Les molettes cylindriques 55 ont été spécialement étudiées pour s'appliquer aux objets souples disposés en vrac dans les bacs 4 équipés notamment dans ce cas intérieurement de trémies de stockage 60. Il est en effet délicat de s'assurer du prélèvement d'un seul article souple disposé en vrac dans une trémie, tel que par exemple des articles textiles. Un dispositif de préhension de ce type est notamment connu et décrit dans la demande de brevet européenne N° 84 440 057.2 publiée sous le N° 0 145 630 le 19 Juin 1985.

Le principe de fonctionnement d'un tel système est sommairement illustré aux figures 11a et 11b. Les molettes cylindriques 55 sont motorisées et en appui l'une contre l'autre par leur génératrice.

Les molettes 55 sont plongées dans la trémie 60 jusqu'à venir en appui avec les articles 61 disposés en vrac dans la trémie tel qu'il illustré à la figure 11a. Alors, les molettes 55 sont mises en rotation de sorte à venir happer l'article 61 ou son emballage souple se trouvant en contact avec celles-ci comme le montre la figure 11b.

Un dispositif capteur permet de détecter la présence de l'article ou de son emballage entre les molettes 55, et aussitôt l'article happé, la rotation des molettes est arrêtée et l'outil de préhension peut être relevé, l'article 61 étant alors pincé entre les molettes.

Pour dégager l'article 61, il suffira d'inverser le sens de rotation des molettes 55. Par ailleurs, la trémie de stockage 60 est avantageuse car les articles se regroupent dans le fond de la trémie quelle que soit leur quantité.

En ce qui concerne l'alimentation électrique des différents chariots automoteurs 5, celle-ci se fera par exemple au moyen de batteries portées par le châssis du chariot. Ces batteries seront rechargées périodiquement par exemple le long du parcours des allées par le chariot, ces dernières étant alors prévues avec une ligne d'alimentation à contacts flottants, technique connue de l'Homme de l'Art.

Le chariot automoteur 5 tel que précédemment décrit peut s'appliquer par conséquent au prélèvement d'articles, quelle que soit leur nature, dans les stocks pour regrouper les dits articles prélevés dans les bacs 2 de commandes 14 stockés dans le meuble-magasin embarqué 10, les dits bacs 14 étant ensuite dirigés vers un poste annexe d'expédition où ils seront emballés et expédiés.

A cet effet, le meuble-magasin embarqué 10 présente des glissières d'échange, non représentées, autorisant le transfert du dit meuble 10 vers un poste d'emballage mécanisé et autorisant le rééquipement du dit chariot automoteur avec un autre meuble-magasin 10 vide.

En outre, le chariot automoteur 5 de l'invention pourra être également utilisé pour assurer le réapprovisionnement des stocks, dans ce cas l'ensemble manipulateur 21 ne sera pas utilisé et le chariot présentera une configuration telle que représentée à la figure 2. En effet, dans ce cas, seuls les prélèvements de bacs seront nécessaires, d'une part d'un poste d'alimentation manuelle du magasin vers le meuble-magasin embarqué 10, et d'autre part de ce dernier vers le magasin de stockage 1.

Ainsi, selon la nature des travaux exécutés, le chariot automoteur de la présente invention pourra être équipé de différents montages précédemment décrits, de même, il pourra exister différentes configurations du meuble-magasin embarqué 10 selon les besoins. toutefois, il sera avantageux que les bacs de stock 4 et les bacs de réception de commande 14 aient la même configuration extérieur ce qui permettra au meuble-magasin embarqué 10 d'admettre les deux sortes de bacs 4 ou 14.

La figure 14 représente le plan d'un magasin de stockage 10 avec manutention automatisée destiné à être équipé avec des chariots automoteurs 5 de la présente invention. Il s'agit d'un exemple de fonctionnement non limitatif.

Le magasin de stockage 1, constitué comme décrit précédemment de casiers de stockage 2 bordant les allées 3 du magasin et remplis d'une multitude de bacs de stock unitaire 4, sera de préférence divisé en plusieurs zones. Dans l'exemple illustré, il comportera quatre zones repérées A, B, C, D, qui correspondront sensiblement chacune à une nature d'article différente, en particulier dans les zones "amont" des articles encombrants et dans les zones ultérieures le petit vrac.

Dans la mémoire de l'ordinateur central de l'installation de manutention robotisée de la présente invention sont introduites les différentes commandes à regrouper et à honorer provenant du service clientèle. Généralement, le système central gère plusieurs milliers de lots d'articles à regrouper, appelés précédemment "commande", qu'il combine et fractionne en un lot élémentaire de commandes constitué de plusieurs lots d'articles à regrouper correspondant à un meuble-magasin embarqué 10 d'un chariot automoteur 5. Le système central optimalise cette répartition entre les différents chariots automoteurs en circulation dans l'installation de manutention.

Lorsqu'un lot élémentaire de commandes a été affecté à un chariot automoteur équipé d'un meuble-magasin embarqué, le dit chariot automoteur reçoit sa "mission"; en effet, l'ordinateur central de gestion transmet les différentes étapes du cycle que le chariot automoteur 5 devra effectuer. Cette transmission de données sera notamment possible grâce en outre aux circuits de dialogue prévus entre l'ordinateur central et chaque ordinateur embarqué comme décrits précédemment.

Le chariot automoteur 5 choisi par le système de gestion central, dans la mémoire de l'ordinateur embarqué duquel est mémorisée en outre sa "mission", la configuration et le plan du magasin de stockage 1, la configuration et l'équipement du chariot automoteur 5 et son meuble-magasin embarqué 10 effectue, toute une série de manipulations de bacs et éventuellement d'articles, en suivant un trajet tel qu'illustré par exemple à la figure 14.

Le parcours des différents chariots automoteurs 5 destiné à regrouper les lots d'articles et réunir les éléments d'une commande se fait notamment selon un mode de boucle imbriquée.

Dans l'exemple de la figure 14, les chariots automoteurs 5 provenant en 62, vides du poste d'expédition, se dirigent vers l'allée 63 pour y prélever les articles nécessaires, reviennent par l'allée 64 puis passent par l'allée 65 et enfin reviennent par l'allée 66 ayant ainsi parcouru toutes les allées de la zone A.

Les zones B, C, D, sont parcourues de façon analogue étant entendu que toutes les allées n'ont pas à être parcourues si aucun article n'est à prélever dans une rangée allée et retour. A l'issue de la zone D, les chariots automoteurs 5 se dirigent en 67 vers le poste d'emballage et d'expédition.

Il est à noter que dans un mode de réalisation avantageux, les allées du magasin de stockage 1 seront telles qu'un chariot automoteur 5 s'y déplace en prélevant soit des articles dans les bacs de casiers 2 situés soit sur la droite soit sur la gauche du chariot. Ainsi, on améliorera la vitesse de travail et la compacité du magasin. Par contre, on pourrait imaginer également que les allées soient suffisamment larges pour que deux chariots puissent se dépasser; cette configuration sera avantageuse dans le cas de grosses unités, chaque chariot étant affecté à une seule face de casier par allée.

En ce qui concerne le réapprovisionnement des stocks, il pourra être réalisé à l'aide de casiers auxiliaires 68 tels qu'illustrés sur la figure 14. Ces derniers seront spéciaux en ce sens que les bacs y contenus peuvent être extraits par chacune de leur face. De la sorte, les opérateurs 69 placés derrière les casiers retireront les bacs de stock unitaire vides du casier 68 et les rempliront à l'aide d'articles amenés depuis un magasin d'approvisionnement général, non représenté, et replaceront les bacs de stock unitaire remplis dans les casiers 68.

Des chariots automoteurs 5, tels que décrits précédemment dans leur version réapprovisionnement des stocks et illustrés à la figure 2, parcourront alors les casiers auxiliaires 68 selon des chemins 70 et amèneront les bacs de stock unitaire vides et reprendront les bacs de stock unitaire remplis pour réapprovisionner les casiers 4 du magasin de stockage 1. Le prélèvement de pièces est toujours possible par les chariots automoteurs 5 de prélèvement dans les casiers 68 en parcourant les chemins 70, ce qui ne bloque pas le prélèvement dans les références en cours de réapprovisionnement.

Dans l'exemple choisi, il a été envisagé une action simultanée des chariots automoteurs 5 de prélèvement des pièces de stock et des chariots automoteurs 5 de réapprovisionnement du stock. Toutefois, lorsque le niveau d'activité est faible, il est possible d'utiliser un même chariot automoteur 5 qui travaillera alors selon les moments en réapprovisionnement du stock ou en prélèvement des pièces pour réunir les éléments d'une commande.

Le déroulement d'une prise d'articles dans le magasin de stockage par un chariot automoteur 5 peut être résumé de la manière suivante. L'ordinateur central de l'installation 1 ayant transmis à l'ordinateur embarqué 9 sa mission de travail, chaque prise d'articles dans le magasin de stockage 1 est indexée selon la position de l'article, connue par le système, dans le magasin de stockage.

Pour aller chercher un article dans un bac de stockage unitaire 4, le chariot automoteur 5 connaît par son ordinateur embarqué 9 : l'allée 3, notamment repérée par une fréquence, la colonne 6 du casier 2 dans l'allée correspondante, repérée notamment par des numéros d'ordre ordonnés, le niveau du bac 4 à prélever dans la dite colonne 6 déterminée, notamment repéré par une distance numérique à partir d'un niveau de référence, le numéro du bac de stock 4 apposé sur ce dernier, le poids unitaire de l'article à prélever, la quantité d'articles à prélever, le type d'outil de préhension nécessaire pour prélever l'article, le numéro du bac de réception de commande 14 dans le meuble embarqué 10, la colonne 13 de ce meuble dans lequel est placé le bac 14 et son niveau par rapport à une côte de référence.

Avec toutes ces données, le chariot automoteur 5 concerné se déplace donc vers son allée, comme par exemple décrit précédemment en regard de la figure 14. Lorsque le chariot 5 entre dans l'allée requise, son lecteur de code casier permet de reconnaître les colonnes et de se prépositionner devant celle sélectionnée, le chariot roulant au moment du prépositionnement alors en petite vitesse.

Arrivé devant la colonne 4 sélectionnée, le chariot alors s'arrête. Il est à noter que pendant ce temps de translation, c'est-à-dire en temps masqué, la table de réception de commande 18 se sera prépositionnée au niveau du bac à prélever par l'intermédiaire de ses organes moteurs contrôlés par le capteur numérique de hauteur 30. De même, les moyens de préhension 21 se seront équipés du type d'outils 53, 54 ou 55 adaptés à l'article à manipuler.

Agissent ensuite les moyens de recentrage 20, par l'intermédiaire du dispositif de visée 42 qui, contrôlant les organes moteurs de la table de réception 18, positionneront précisément en abscisse et en ordonnée cette dernière devant le bac de stock 4 choisi à manipuler. Ce positionnement terminé, les moyens de prélèvement 19 des bacs seront actionnés pour faire glisser le dit bac sur la table de réception 18.

Ensuite, le dit bac de stock ainsi manipulé, est centré, par l'intermédiaire des capteurs et des organes moteurs de la table 18, vis-à-vis des moyens de préhension 21 des articles. Par l'intermédiaire du bras 51 support de la tête de préhension 50 des outils, mobile verticalement, l'outil plongera dans le bac de stock 4 pour en prélever l'article puis ressortira du bac.

Par ailleurs, en temps masqué également, c'est-à-dire pendant les translations du chariot, le bac de réception de commnande 14 aura été placé sur la table de réception de commande 18, tel qu'illustré sur les figures, sensiblement de la même manière que l'on prélève le bac de stock 4.

En effet, le meuble-magasin embarqué 10 se déplace en rotation de manière à présenter la colonne choisie 13 face à la table de réception de commande 18, cette dernière se plaçant à la hauteur souhaitée pour extraire le bac 14 requis et le faire glisser sur la table 18.

A cet égard, la table 18 effectuera une rotation de 90° par rapport à la direction de déplacement du chariot automoteur 5 pour placer les deux bacs 4 et 14 sensiblement parallèles.

Lorsque les moyens de préhension 21 des articles sont relevés, la table 18 de réception des bacs effectue une translation telle que le bac de réception de commande 14 choisi se trouve à l'aplomb de l'article prélevé. A ce moment, on cesse le maintien de l'article pour le faire chûter dans le bac de réception 14.

Ensuite, les bacs 4 et/ou 14 sont replacés dans leur colonne respective 4 et/ou 13 par des manoeuvres inverses et le chariot continue son trajet vers une autre position pour effectuer un autre prélèvement d'article.

Il est à remarquer que selon ce procédé, la majorité des préparations des moyens et organes spécifiques du chariot se font en temps masqué pour minimiser les temps de manutention. Par ailleurs, pour minimiser les risques de perte d'articles lors des préhensions, la tête de préhension 21 ne bouge pas en translation lorsque l'article est prélevé, ce sont les bacs placés en dessous qui se déplacent, par l'intermédiaire de la table 18.

En outre, de multiples opérations de contrôle sont prévues pour s'assurer du bon déroulement de la manutention. Par exemple, comme il a été décrit précédemment, on compare la référence portée par les bacs prélevés et celle du bac à manipuler choisi par l'ordinateur; on compare également le poids théorique de l'article prélevé connu et celui effectivement prélevé par les moyens de préhension.

## Revendications

1. Installation de manutention robotisée, destinée à équiper un magasin de stockage (1) d'articles de types divers, soit pour autoriser le réapprovisionnement du stock, soit pour autoriser le regroupement d'articles prélevés dans le magasin de stockage pour former des lots d'articles constituant une commande, ledit magasin (1) présentant un ensemble de casiers modulaires (2), une pluralité d'allées (3) le long desquelles sont disposés les casiers modulaires (2), et une multitude de bacs de stock unitaire (4) dans chacun desquels sont stockées lesdits articles par type et référence d'articles, lesdits casiers étant formés par un assemblage de colonnes (6) juxtaposées dans lesquelles sont placés et guidés de façon superposée lesdits bacs de stock unitaire (4), ladite installation comportant au moins:
   – un ordinateur central de gestion de l'installation et desdites commandes,
   – un ou plusieurs chariots automoteurs (5) de manutention robotisée destinés à manutentionner lesdits bacs (4) dans le magasin de stockage (1) et à prélever des articles dans les bacs (4) du magasin de stockage (1) pour former les lots d'articles et rassembler lesdites commandes, ledit chariot automoteur (5) comportant au moins:
   – un châssis motorisé (7) présentant en outre des moyens de translation (8) aptes à le déplacer dans les allées (3) du magasin de stockage (1) devant lesdits casiers modulaires (2),
   – un ordinateur embarqué (9) apte à dialoguer avec l'ordinateur central pour gérer les déplacements et les arrêts du chariot (5) dans le magasin de stockage (1) et pour contrôler ses mouvements de déplacement,
   – un meuble-magasin embarqué (10) formé par un assemblage de colonnes (13) aptes à recevoir et à maintenir de façon superposée des bacs de réception de commande (14), ledit châssis motorisé comportant au moins:
   – une table de réception (18) des bacs aptes à porter au moins un bac de stock (4) et/ou un bac de réception (14) de commande,
   – des moyens de prélèvement (19) des bacs susceptibles soit de déplacer un bac de stock unitaire (4) entre les casiers (2) du magasin de stockage (1) et ladite table de réception (18) des bacs, soit de déplacer un bac de réception de commande (14) entre le meuble-magasin embarqué (10) et la dite table de réception des bacs (18),
   – des moyens de préhension (21) susceptibles de prendre un des articles contenu dans le bac de stock (4) placé sur la table de réception (18) pour le déposer ensuite dans un bac de réception de commande (14), caractérisée par le fait que la dite table (18) présente des moyens moteur de translation (71, 72) afin qu'elle puisse au moins se déplacer linéairement en plus ou en moins indépendamment du châssis motorisé (7, 8), soit devant les casiers (2) du magasin (1) de stockage soit devant au moins une des colonnes (13) du meuble-magasin embarqué (10), et que la dite table (18) présente en outre des moyens de recentrage (20) agissant sur la table de réception (18) des bacs par l'intermédiaire des dits moyens moteur de translation (71, 72) aptes à positionner précisément en abscisse et en ordonnée les moyens de prélèvement (19) devant un bac (4) contenu dans les casiers (2) du magasin de stockage (1).

2. Installation de manutention robotisée selon la revendication 1, caractérisée par le fait que la table de réception (18) des bacs comporte:
   – un plateau supérieur (23) de réception des bacs, solidaire d'un chariot (71) de translation de table, présentant des moyens de guidage (24) des bacs aptes à diriger et à faciliter le positionnement des bacs de stock (4) et/ou des bacs de réception de commande (14) lors des mouvements de transfert des bacs manipulés par lesdits moyens de prélèvement (19),
   – un chariot à tourelle (25) essentiellement constitué par une embase (27) solidaire dudit châssis motorisé (7) et par une tourelle (28). libre en rotation, portée et guidée par ladite embase (27), présentant un chemin de roulement (72) sur lequel se déplace ledit chariot de translation de table (71),
   – ledit chariot de translation de table (71), fixé sous le plateau supérieur (23), présentant un organe moteur apte à déplacer linéairement à faible vitesse la table de réception (18) des bacs dans une direction (22) définie par ledit chemin de roulement (72), de ladite tourelle (28),
   – ledit chariot à tourelle (26) présentant un organe moteur apte à entrainer en rotation la tourelle (28) et par suite la table de réception (18) par rapport à l'embace (27) afin de faire pivoter horizontalement la table de réception (18) des bacs pour au moins la disposer soit face aux bacs de stock (4) contenus dans les casiers modulaires (2) du magasin de stockage (1) soit face aux bacs de réception de commande (14) contenus dans le meuble-magasin embarqué (10).

3. Installation de manutention robotisée selon la revendication 1, caractérisée par le fait que les moyens de prélèvement (19) des bacs sont constitués par un dispositif d'extraction (34), guidé et porté par la table de réception (18) des bacs, présentant des moyens d'accrochage (35), amovibles avec le bac à manipuler, ledit dispositif (34) étant animé d'un mouvement longitudinal par rapport à l'axe principal (36) de ladite table (18), susceptible d'agripper la face latérale avant du bac (4) ou (14) choisi pour le prélever soit du magasin de stock (1) soit du meuble-magasin embarqué (10) et le faire glisser vers ladite table de réception (18) et/ou inversement de le repousser et de le replacer dans le magasin de stock (1) ou le meuble-magasin embarqué (10).

4. Installation de manutention robotisée selon la revendication 1, caractérisée par le fait que les moyens de recentrage (20) de la table de réception (18) des bacs comportent un dispositif de visée (42) permettant le positionnement en abscisse et en ordonnée formé par un ou plusieurs capteurs de positionnement portés par ladite table de réception, et par un multitude de réflecteurs (43) portés par les casiers du magasin de stockage (1) et positionnées précisément à l'aplomb de chaque bac de stock (4).

5. Installation de manutention robotisée selon la revendication 1, caractérisée par le fait que les moyens de préhension (21) sont constitués par un ensemble manipulateur (49) formé par une tête de préhension (50), apte à plonger dans le différents bacs (4 ou 14) pour y prélever un article, montée sur un bras support (51), mobile verticalement, qui est lui-même monté sur une potence support manipulateur (52) portée par le châssis motorisé (7) du chariot automoteur (5), ladite tête de préhension (50) se présentant sous la forme d'une étoile (57) dont les branches (56) sont équipées à leurs extrémités d'outils (53, 54, 55) de préhension adaptés aux aricles à manipuler.

6. Installation de manutention robotisée selon la revendication 1, caractérisée par le fait que le meuble-magasi embarqué (10) se présente sous la forme d'un meuble tournant, porté de façon amovible par le chariot automoteur (5), constitué de plusieurs colonnes (13) de bacs de commande (14) superposés réparties sur le pourtour du meuble, ledit meuble-magasin (10), étant entraîné en rotation par l'organe moteur contrôlé et commandé par l'ordinateur embarqué de façon à présenter la face avant (15) du bac (14) choisi face à la table de réception (18), perpendiculairement à la direction de déplacement (22) du chariot automoteur (5).

7. Installation de manutention robotisée selon la revendication 1, caractérisée par le fait que l'ordinateur embarqué (9) sur chaque chariot automoteur (5) comporte essentiellement:
- un circuit de dialogue avec l'ordinateur central de gestion de l'installation pour transmettre des données,
- un circuit de commande numérique et une logique de traitement pour commander et contrôler les positionnements de la table de réception des bacs (18),
- un micro-calculateur qui assure la commande et le guidage des déplacements du châssis motorisé (7) dans les allées (3) du magasin (1),
- un mini-ordinateur dans lequel est mémorisée en outre la mission que doit effectuer le chariot automoteur (5), la configuration et le plan du magasin de stockage (1), la configuration et l'équipement du chariot automoteur (5), la configuration du meuble-magasin (10) qu'il porte, qui assure le contrôle de tous les mouvements du chariot automoteur (5) et organise le travail dudit chariot automoteur.

8. Installation de manutention robotisée selon la revendication 1, caractérisée par le fait que le châssis motorisé (7) comporte:
- un bâti principal (11), adapté à la largeur des allées (3), monté sur roues (12) commandées par lesdits moyens de translation (8),
- une antenne de positionnement, portée par le bâti, permettant de reconnaitre et de suivre les allées (3) du magasin de stockage (1),
- un lecteur de code casier, porté par le bâti, permettant de reconnaitre les colonnes (4) des différents casiers (2) et de se prépositionner devant celles-ci.
- une colonne de guidage (29), solidaisre du bâti (11) placée sensiblement verticalement, le long de laquelle peuvent se mouvoir de bas en haut et inversement la table de réception (18) des bacs, les moyens de prélèvement des bacs (19) et les moyens de préhension des articles (21),
- un capteur numérique de hauteur (30), constitué par un axe numérisé (31) placé sur toute la hauteur de la colonne de guidage, et par un codeur de lecture de l'axe (32), apte à délivrer une information électrique fonction de la hauteur de la table de réception (18) des bacs par rapport à un niveau de référence préétabli.

9. Installation de manutention robotisée selon la revendication 2, caractérisée par le fait que les moyens de guidage (24) des bacs sont constitués par des glissières (25) dont l'entr'axe correspond sensiblement aux dimensions du fond extérieur des bacs (4 ou 14) à prélever et disposées de façon divergente pour favoriser l'introduction des bacs (4 ou 14) entre celles-ci.

10. Installation de manutention robotisée selon la revendication 3, caractérisée par le fait que le dispositif d'extraction (34) est constitué par un extracteur à pince présentant une pince (35) portée par un chariot (38), monté à coulissement dans un rail de guidage (39) placé longitudinalement par rapport à l'axe principal (36) de la table de réception (18), ladite pince (35) étant apte à agripper une poignée (37) fixée sur la face frontale de chaque bac de stock (4) et/ou de commande (14), ladite pince (35) étant articulée et déportée par rapport au moyen de guidage (39) pour autoriser deux axes (40 et 41) de mouvement parallèle à l'axe principal (36) de la table (18).

11. Installation de manutention robotisée selon la revendication 4, caractérisée par le fait que les capteurs de positionnement (42) du dispositif de visée (20) sont organisés pour délivrer quatre signaux de sortie fonction des quatre quadrants définis par deux axes orthogonaux abscisse-ordonnée, complété par un signal de présence d'un réflecteur (43) face au dispositif de visée (20).

12. Installation de manutention robotisée selon la revendication 5, caractérisée par le fait que l'étoile (57) de la tête de préhension (50) est équipée d'un préhenseur à molettes cylindrique (55) et/ou de ventouses (53, 54).

13. Installation de manutention robotisée selon la revendication 6, ladite installation comportant en outre un poste d'emballage mécanisé de commandes ainsi constituées et un nombre de meuble-magasin embarquable (10) supérieur au nombre de chariots automoteurs (5) en circulation dans le magasin (1), caractérisée par le fait que le meuble-magasin embarqué (10) présente des glissières d'échange autorisant le transfert dudit meuble (10) vers le poste d'emballage mécanisé, et le rééquipement dudit chariot automoteur (5) avec un autre meuble-magasin vide (10).

14. Installation de manutention robotisée selon la revendication 2, caractérisée par le fait que la table de réception (18) des bacs comporte un lecteur de code bac permettant d'identifier le bac (4 ou 14) à prélever et de vérifier la concordance effective du bac lu et du bac à manipuler préchoisi par l'ordinateur central et/ou embarqué.

15. Installation de manutention robotisée selon la revendication 2, caractérisée par le fait que le plateau supérieur (23) de la table de réception (18) des bacs comporte des moyens de pesée du bac de stock (4) prélevé dans le magasin de stockage (1) permettant d'effectuer une double pesée avant et après préhension d'un article dans le bac (4) afin de vérifier la concordance effective du poids de l'article prélevé et celui théorique de l'article préchoisi par l'ordinateur central et/ou embarqué.

**Patentansprüche**

1. Roboterisierte Behandlungsanlage, bestimmnt zur Ausrüstung eines Vorratslagers (1) für Artikel verschiedener Typen, entweder zum Erlauben der Vorratserneuerung oder zum Erlauben der Gruppierung von dem Vorratslager entnommenen Artikeln zwecks der Bildung von Warenposten, die einen Auftrag zusammenstellen, wobei das genannte Lager (1) eine Reihe von Modularfächern (2), eine Vielzahl von Gängen (3), entlang denen die Modularfächer (2) aufgestellt sind und eine Vielheit von einheitlichen Vorratskästen (4), in denen die genannten Artikel pro Typ und Artikelnummer aufgelagert sind, aufweist, wobei die genannten Fächer durch eine Verbindung von nebeneinanderstehenden Säulen (8), in die die genannten einheitlichen Vorratskästen (4) aufgestellt und geführt werden, gebildet sind, wobei die genannte Anlage mindestens umfaßt:

– einen Zentralcomputer zur Führung der Anlage und der genannten Aufträge, - einen oder mehrere selbstfahrende Wagen (5) zur roboterisierten Behandlung, bestimmt zum Handhaben der genannten Kästen (4) im Vorratslager (1) und zum Entnehmen von Artikeln aus den Kästen (4) des Vorratslagers (1) zwecks der Zusammenstellung der Warenposten und der Versammlung der genannten Aufträge, wobei der genannte selbstfahrende Wagen (5) mindestens umfaßt:

– ein motorbetriebenes Fahrgestell (7), das überdem Verschiebungsmittel (8) aufzeigt, die dafür geeignet sind, ihn in den Gängen (3) des Vorratslagers (1), an den genannten Modularfächern (2), fortzubewegen,

– einen verladenen Computer (9), geeignet für das Führen eines Dialogs mit dem Zentralcomputer, zwecks der Steuerung der Fortbewegungen und Stillstände des Wagens (5) im Vorratslager (1) und der Überwachung dessen Verstellbewegungen,

– ein durch eine Verbindung von Säulen (13) gebildetes verladenes Lagermöbel (10), geeignet für das Aufnehmen und Aufeinanderhalten von Auftragsaufnahmekästen (14), wobei das genannte Fahrgestell mindestens umfaßt:

– einen Kästenaufnahmetisch (18), geeignet für das Tragen von mindestens einem Vorratskasten (4) und/oder einem Auftragsaufnahmekasten (14),

– Kästenentnahmemittel (19), geeignet entweder für das Verstellen eines einheitlichen Vorratskastens (4) zwischen den Fächern (2) des Vorratslagers (1) und dem genannten Kästenaufnahmetisch (18) oder für das Verstellen eines Auftragsaufnahmekastens (14) zwischen dem verladenen Lagermöbel (10) und dem genannten Kästenaufnahmetisch (18),

– Greifmittel (21), geeignet für das Greifen eines der im auf dem Aufnahmetisch (18) befindlichen Vorratskasten (14) enthaltenen Artikel um ihn anschließend in einen Auftragsaufnahmekasten (14) zu bringen, dadurch gekennzeichnet, daß der genannte Tisch (18) mit Verstellbewegungsmitteln (71, 72) versehen ist, damit er sich mindestens mehr oder weniger unabhängig vom motorbetriebenen Fahrgestell (7, 8), entweder an den Fächern (2) des Vorratslagers (1) oder an mindestens einer der Säulen (13) des verladenen Lagermöbels (10) linear fortbewegen könne und daß der genannte Tisch (10) überdem mit Neuzentriermitteln (20) versehen ist, die den Kastenaufnahmetisch (18) über die genannten Verstellbewegungsmittel (71, 72) betätigen und dafür geeignet sind, die Entnahmemittel (19) genau in der Abszisse und der Ordinate vor einen in den Fächern (2) des Vorratslagers (1) enthaltenen Kasten zu stellen.

2. Roboterisierte Behandlungsanlage nach Anspruch 1, dadurch gekennzeichnet, daß der Kästenaufnahmetisch (18) umfaßt:

– eine mit einem Tischverstellungswagen (71) verbundene Kästenaufnahmeoberplatte (23), versehen mit Kastenführungsmitteln (24), die für das Führen und das Vereinfachen der Positionierung der Vorratskästen (4) und/oder der Auftragsaufnahmekästen (14) bei der Übertragungsbewegungen der von den genannten Entnahmemitteln (19) gehandhabten Kästen geeignet sind,

– einen mit einem Drehzapfen versehenen Wagen (26), bestehend hauptsächlich aus einer mit dem genannten motorbetriebenen Fahrgestell verbundenen Grundplatte (27) und einem freidrehenden, von der genannten Grundplatte (27) unterstützten und geführten Drehzapfen (28), der eine Rollbahn (72), auf der sich der genannte Tischverstellwagen (71) verstellt, aufweist

– wobei der genannte, unter der Oberplatte (23) befestigte Tischverstellwagen (71) ein Bewegungsorgan aufweist, geeignet für das lineare Verstellen mit geringer Geschwindigkeit des Kastenaufnahmetisches (18) in einer von der genannten Rollbahn (72) des genannten Zapfes (28) bestimmten Richtung (22),

– wobei der genannte, mit einem Drehzapfen versehene Wagen (26) ein Bewegungsorgan aufweist, das dafür geeignet ist, den Zapfen (18) und, demzufolge, den Aufnahmetisch (18) im Verhältnis zur Grundplatte (27) in Drehung anzutreiben, um den Kästenaufnahmetisch (18) waagerecht drehen zu lassen, um ihn mindestens entweder vor die in den Modularfächern (2) des Vorratslagers (1) enthaltenen Vorratskästen (4) oder vor die im verladenen Lagermöbel (10) enthaltenen Auftragsaufnahmekästen (14) zu bringen.

3. Roboterisierte Behandlungsanlage nach Anspruch 1, dadurch gekennzeichnet, daß die Kästenentnahmemittel (19) bestehen aus einer vom Kästenaufnahmetisch (18) geführten und getragenen Ausziehvorrichtung (34), die mit den zu handhabenden Kasten abnehmbare Einhakmittel (35) aufweist, wobei die genannte Vorrichtung (34) mit einer Längsbewegung zur Hauptachse (36) des genannten Tisches (18) bewogen wird und die vordere Seitenfläche des entweder dem Vorratslager (1) oder dem verladenen Lagermöbel (10) zu entnehmenden Kastens (4) oder (14) angreifen und den Kasten zum genannten Aufnahmetisch (10) gleiten und/oder, umgekehrt, in das Vorratslager (1) oder das verladene Lagermöbel (10) zurückdrücken und zurücksetzen kann.

4. Roboterisierte Behandlungsanlage nach Anspruch 1, dadurch gekennzeichnet, daß die Mittel zum Neuzentrieren (20) des Kästenaufnahmetisches (18) eine Richtvorrichtung umfassen, welche die Positionierung in der Abszisse und der Kordinate ermöglicht, bestehend aus einem oder mehreren vom genannten Aufnahmetisch getragenen Stellengebern und einer Vielheit von Reflektoren (43), die von den Kästen des Vorratslagers (1) getragen und genau lotrecht zu jedem Vorratskasten (4) positioniert sind.

5. Roboterisierte Behandlungsanlage nach Anspruch 1, dadurch gekennzeichnet, daß die Greifmittel (21) bestehen aus einer Handhabungseinheit (49), gebildet von einem Greifkopf (50), der dafür geeignet ist, in die verschiedenen Kästen (4 oder 14) zu tauchen um einen Artikel zu entnehmen, und auf einem senkrecht beweglichen Tragarm (51) montiert ist, welcher selbst auf einem vom motorbetriebenen Fahrgestell (7) des selbstfahrenden Wagens (5) getragenen Handhabungsvorrichtungstragpfosten (52) montiert ist, wobei der genannte Greifkopf (50) die Gestaltung eines Sterns hat, dessen Arme (56) an deren Außenenden mit den zu handhabenden Artikeln angepaßten Greifzeugen (53, 54, 55) ausgerüstet sind.

6. Roboterisierte Behandlungsanlage nach Anspruch 1, dadurch gekennzeichnet, daß das verladene Lagermöbel (10) die Form eines vom selbstfahrenden Wagen (5) abnehmbar getragenen Drehmöbels zeigt, bestehend aus verschiedenen Reihen (13) von auf dem Umkreis des Möbels verteilten, übereinanderliegenden Auftragsaufnahmekästen (14), wobei das genannte Lagermöbel vom über den verladenen Computer überwachten und gesteuerten Bewegungsorgan so in Drehung angetrieben wird, daß die Vorderseite (15) des gewählten Kastens (14) gegenüber dem Aufnahmetisch (10), senkrecht zur Verstellungsrichtung (22) des selbstfahrenden Wagens (5) gebracht wird.

7. Roboterisierte Behandlungsanlage nach Anspruch 1, dadurch gekennzeichnet, daß der auf jeden selbstfahrenden Wagen (5) verladene Computer (9) hauptsächlich umfaßt:

– einen Kreis für den Dialog mit dem zentralen Anlageführungscomputer, zwecks Datenübertragung,

– einen numerischen Steuerkreis und eine Verarbeitungslogik zur Steuerung und Überwachung der Stände des Kästenaufnahmetisches (18),

– einen Mikrorechner, der die Steuerung und die Führung der Verstellungen des motorbetriebenen Fahrgestells (7) in den Gängen (3) des Lagers (1) durchführt,

– einen Minicomputer, in dem überdem der vom selbstfahrenden Wagen (5) durchzuführende Auftrag, die Konfiguration und der Plan des Vorratslagers (1), die Konfiguration und die Ausrüstung des selbstfahrenden Wagens (5), die Konfiguration des Lagermöbels (10), das er trägt, gespeichert sind und der die Überwachung der sämtlichen Bewegungen des selbstfahrenden Wagens (5) durchführt und die Arbeit des genannten selbstfahrenden Wagens organisiert.

8. Roboterisierte Behandlungsanlage nach Anspruch 1, dadurch gekennzeichnet, daß das motorbetriebene Fahrgestell (7) umfaßt:

– ein der Breite der Gänge (3) angepaßtes, auf von den genannten Verstellmitteln (8) gesteuerten Rädern (12) montiertes Hauptgestell (11),

– eine vom Gestell getragene Stellungsantenne, die es ermöglicht, die Gänge (3) des Vorratslagers (1) zu erkennen und zu folgen,

– ein vom Gestell getragenes Fachkodelesegerät, das es ermöglicht, die Reihen (4) der verschiedenen Fächer (2) zu erkennen und sich vor diese letzten zu stellen,

– eine mit dem Gestell (11) verbundene, merkbar senkrecht aufgestellte Führungssäule (29), entlang der sich der Kästenaufnahmetisch (18), die Kästenentnahmemittel (19) und die Artikelgreifmittel (21) von unten nach oben und umgekehrt bewegen können,

– einen numerischen Höhengeber (30), bestehend aus einer auf der ganzen Höhe der Führungssäule aufgestellten numerisierten Achse (31) und einem Achsenlesekodiergerät (32), geeignet für das Geben einer der Höhe des Kästenaufnahmetisches (18) im Verhältnis zu einer voreingestellten Höhe abhängigen elektrischen Information.

9. Roboterisierte Behandlungsanlage nach Anspruch 2, dadurch gekennzeichnet, daß die Kästenführungsmittel (24) bestehen aus Gleitstangen (25), deren Achsenabstand den Abmessungen des Außenbodens der zu entnehmenden Kästen (4 oder 14), die auf einer auseinander gehenden Weise angeordnet sind, um die Einführung der Kästen (4 oder 14) zwischen diesen letzten zu fördern, beträchtlich entspricht.

10. Roboterisierte Behandlungsanlage nach Anspruch 3, dadurch gekennzeichnet, daß die Ausziehvorrichtung (34) besteht aus einem Klammerauszieher (35), der eine von einem gleitend auf einer in der Längsrichtung zur Hauptachse (36) des Aufnahmetisches (18) aufgestellten Führungsschiene (39) montierten Wagen (38) getragene Klammer (35) aufweist, wobei die genannte Klammer (35) dafür geeignet ist, einen an der Vorderseite jedes Vorrats- (4) und/oder Auftragskastens (14) befestigten Griff (37) anzugreifen, wobei die genannte Klammer (35) gelenkt und im Verhältnis zum Führungsmittel (39) verlagert ist um zwei Bewegungsachsen (40 und 41) parallel zur Hauptachse (36) des Tisches (18) zu gestatten.

11. Roboterisierte Behandlungsanlage nach Anspruch 4, dadurch gekennzeichnet, daß die Stellengeber (42) der .Richtvorrichtung (20) so eingerichtet sind, daß sie vier Ausgangssignale abhängig von den vier von zwei winkelrechten Abszisse-Ordinate-Achsen bestimmten Quadranten erzeugen, ergänzt durch ein Signal für Anwesenheit eines Reflektors (43) gegenüber der Richtvorrichtung (20).

12. Roboterisierte Behandlungsanlage nach Anspruch 5, dadurch gekennzeichnet, daß der Stern (57) des Greifkopfes (50) mit einem zylindrischen Rändelgreifer (55) und/oder Saugnäpfen (53, 54) versehen sind.

13. Roboterisierte Behandlungsanlage nach Anspruch 6, wobei die genannte Anlage überdem einen mechanisierten Verpackungsstand für die also zusammengestellten Aufträge und eine Anzahl von verladenen Lagermöbeln (10), welche die Anzahl der im Lager (1) laufenden selbstfahrenden Wagen (5) überschreitet, umfaßt, dadurch gekennzeichnet, daß das verladene Lagermöbel (10) Auswechselgleitstangen aufzeigt, welche die Übertragung des genannten Möbels (10) zum mechanisierten Verpackungsstand und die Neuausrüstung des genannten selbstfahrenden Wagens (5) mit einem anderen leeren Lagermöbel (10) gestatten.

14. Roboterisierte Behandlungsanlage nach Anspruch 2, dadurch gekennzeichnet, daß der Kästenaufnahmetisch (18) ein Kastenkodelesegerät umfaßt, das die Identifizierung des zu entnehmenden Kastens (4 oder 14) und die Nachprüfung der wirklichen Übereinstimmung des gelesenen Kastens mit dem vom zentralen und/oder verladenen Computer vorgewählten zu handhabenden Kasten ermöglicht.

15. Roboterisierte Behandlungsanlage nach Anspruch 2, dadurch gekennzeichnet, daß die Oberplatte (22) des Kästenaufnahmetisches (18) Mittel zum wiegen des dem Vorratslager (1) entnommenen Vorratskastens (4) umfaßt, die ein doppeltes Wiegen, vor und nach dem Greifen eines Artikels aus dem Kasten (4), ermöglichen, um die wirkliche Übereinstimmung des Gewichts des entnommenen Artikels mit dem theoretischen Gewicht des vom zentralen und/oder verladenen Computer vorgewählten Artikels nachzuprüfen.

**Claims**

1. A robotic materials-handling system, designed for equipping therewith a warehouse (1) for storing diverse goods, either for allowing the re-stocking of stores or to allow the re-grouping of goods drawn from said warehouse to make up batches of goods to order, said warehouse (1) comprising a set of modular compartments (2), a plurality of lanes (3) along which are disposed said modular compartments (2) and a multiplicity of unitary storage containers in each of which are stored said goods according to type and goods reference, said compartments being constituted by an assembly of juxtaposed columns (6) in which are placed and guided said unitary containers (4), the said system comprising at least:

– a central computer for controlling the system as a whole and the management of orders,

– one or several self-propelled materials handling vehicles (5) designed for handling said containers in warehouse (1) and to draw the goods from the tubs (4) in said warehouse (1) to make up batches of goods and thus to make up said orders, the said self-propelling vehicle (5) comprising at least:

– a motorised chassis (7) comprising travelling means (8) capable of propelling it along the lanes (3) of the warehouse (1) in front of said modular compartments (2),

– an onboard computer (9) capable of communicating with the central computer to control the movements and stops of the vehicle (5) in the warehouse (1) and for controlling the travel thereof,

– an onboard storage compartment (10) formed by an assembly of columns (13) capable of receiving and holding in superimposed array the order-loading containers (14), the said motorised chassis comprising at least:

– a container-support (18) capable of carrying at least one storage container (4) and/or an ordered-goods receiving container (14)

– means (19) for moving the containers as required, either to displace a unitary storage container (4) between the compartments (1) of the warehouse (1) and the said container support (18), or to move an order-loading container (14) between the onboard storage compartment (10) and the said container support (18),

– prehensile means (21) capable of seizing one of the items held on the storage container 4 placed on the container support (18) to place it subsequently into an order-loading container (14), characterised in that the said support (18) has motor drive means (71, 72) so as to enable it to move at least linearly lightly more or less independently of the motorised chassis (7, 8), either in front of the compartments (2) of the warehouse 1 or in front of at least one of the columns (13) of the onboard storage compartment (10) and that the said support (18) furthermore has re-centering means (20) acting on the container support by the intermediary of said motor drive means (71, 72) capable of precise coordinate positioning the pickup means (19) in front of a storage container (9) held in the compartments (2) of the warehouse (1).

2. A robotic materials handling system according to Claim 1, characterised in that the container support (18) comprises:

– an upper container support plate (23) integral with a carriage (71) effecting the traversing movement of the support and carrying guide means (24) for the containers capable of directing and facilitating the positioning of the storage containers (4) and/or the order-loading containers (14) during the transfer movements of the containers manipulated by the said pickup means (19),
— a turreted carriage (26), essentially constituted by a socle (27) integral with the said motorised chassis (7) and by a freely rotating turret (28), having a drive element capable of linearly displacing at low speed the container support (18) in a direction (22) defined by the travel path (72) of said turret (28),
— the said turreted carriage (26) comprises a drive unit capable of causing the turret (28) to rotate and, in consequence, rotates the container support (18) relative to the socle (27) in order to bring about the.

3. A robotic materials handling system according to Claim 1, characterised in that the pickup means (19) of the containers are constituted by an extractor device (34), guided and carried by the container support (18), having engagement means (35) which can be moved together with the container to be handled, the said device (34) executing a longitudinal movement relative to the principal axis (36) of said support (18), capable of seizing the forward lateral face of container (4) or (14) selected for be withdrawn either from the warehouse (1) or from the onboard storage compartment (10) and to cause it to slide towards said container support (18) and/or inversely to push it back and replace it into storage (1) or into the onboard storage compartment (10).

4. A robotic materials handling system according to Claim 1, characterised in that the re-centering means (20) of he container support (18) comprise an aiming device (42) allowing the coordinate positioning, constituted by one or several positioning sensors carried by the said container support, and by a multiplicity of reflectors carried by the compartments of the warehouse (1) and positioned precisely perpendicularly relative to each storage container (4).

5. A robotic materials handling system according to Claim 1, characterised in that the prehensile means (21) are constituted by a handling assembly (49) formed by a pickup head (50) capable of reaching into the various containers (4 or 14) to seize an item therein, mounted on a vertically movable support arm (51) which is in turn mounted on a manipulator support member (52) carried by the motorised chassis (7) of the self-propelled vehicle ʼ(5), the said pickup head (50) having the shape of a star (57) the arms (56) of which are equipped at their ends with gripping tools (53, 54. 55) adapted to the goods to be handled.

6. A robotic materials handling system according to Claim 1, characterised in that the onboard storage compartment (10) has the form of a rotating unit, mounted removably on the self-propelled vehicle (5), constituted by several stacks (13) of order-loading containers (14) superimposed and distributed along the periphery of the compartment, said storage compartment (10) being driven in rotation by the drive unit operated and controlled by the computer so as to offer the front face (15) of the selected container (14) towards the container support (18, perpendicularly to the direction of displacement (22) of the self-propelled vehicle (5).

7. A robotic materials handling system according to Claim 1, characterised in that the onboard computer (9) on each self-propelled vehicle (5) essentially comprises:
— a circuit for communicating with the central computer controlling the system for data transmission,
— a digital control circuit and a logic processor for commanding and controlling the positions in the input table of the containers (18),
— a micro-computer which ensures the control and the guidance of the movements of the motorised chassis (7) in the lanes (3) of the warehouse (1),
— a mini-computer which stores in memory in addition to the task to be executed by the self-propelled chassis (5), the configuration and the plan of the warehouse (1), the configuration and the equipment of the self-propelled vehicle (5), the configuration of the onboard storage container (10) which it carries, which mini-computer provides the control of all movements of the self-propelled chassis (5) and organises the work of said self-propelled vehicle.

8. A robotic materials handling system according to Claim 1, characterised in that the motorised chassis comprises:
— a principal frame (11), adapted to the width of the lanes (3), mounted on wheels (12) operated by the said drive means (8),
— a positioning aerial, carried by the frame, enabling it to recognize and to follow the lanes (3) of the warehouse (1),
— a compartment code reader, carried by the frame, making it possible to recognise the stacks (4) of the different compartments (2) and to take up position in front of the latter,
— a guide shaft (29) integral with the frame (11) and mounted substantially vertically, along which can move upwards and downwards the container support (18), the pickup means (19) for the containers and the means (21) for seizing the items,
— a numerical height detector (30), constituted by a scaled axle (31) placed along the entire height of the guiding column, and by a coder which reads the axle (32) and is capable of supplying electrical signals as a function of the container support (18) relative to a predetermined reference level.

9. A robotic materials handling system according to Claim 2, characterised in that the container guidance means (24) are constituted by slides (25) the median axis of which substantially corresponds to the outer bottom of the containers (4 or 14) to be extracted and disposed in a divergent manner so as to facilitate the introduction of containers (4 or 14) between these.

10. A robotic materials handling system according to Claim 3, characterised in that the extractor device (34) is constituted by a clamp extractor having a plier (35) carried by carriage (38), mounted slidably in a guiding rail (39) disposed longitudinally relative to the principal axis (36) of the container support (18), said clamps (35) being capable of engaging a grip (37) fixed to the front face of each storage container (4) and/or of order-loading container (14), said clamp (35) being articulated and offset relative to the guidance means (39) allow two axes (40 and 41) of movement parallel to the principal axis (36) of support (18).

11. A robotic materials-handling installation according to Claim 4, characterised in that the position sensors (42) of the aiming device (20) are organised to supply four output signals as function of four quadrants defined by two orthogonal abscissa/ordinate axes, completed by a signal indicating the presence of a reflector (43)˙ opposite the aiming device (20).

12. A robotic materials-handling installation according to Claim 5, characterised in that the star (57) of the pickup head (50) is equipped with a gripper in the form of knurled cylinder (55) and/or suckers (53, 54).

13. A robotic materials-handling installation according to Claim 6, said system furthermore comprising a mechanised packing station, operated by instructions thus constituted and a number of onboard storage containers (10) greater than the number of selfpropelled vehicles (5) circulating in the warehouse (1) characterised in that the onboard storage container (10) has transfer sliders allowing the transfer of said container (10) towards the mechanised packaging station, and the re-fitting of said self-propelled vehicle with another empty storage container (10).

14. A robotic materials-handling installation according to Claim 2, characterised in that the container support (18) comprises a container-code reader making it possible to identify the container (4 or 14) to be extracted and to verify the effective match of the container read and the preselected container to be handled by the central and/or the onboard computer.

15. A robotic materials-handling installation according to claim 2, characterised in that the upper plate (23) of the container support (18) comprises means for weighing the storage container (4) extracted from the warehouse, thus making it possible to effect a double weighing before and after the withdrawal of an item therefrom in order to verify the effective match between the weight of the item thus withdrawn and the theoretical one of the preselected item by the central computer.

FIG.1

EP 0 235 488 B1

FIG.2

FIG.3

FIG.4

FIG.5

FIG.6

44 2 4 4544 43

VII a

VII b

37 35 34 38 19 5 7 29 39 18 25 23

46

45

42 20 72 71

VII a 28 26

27 72

FIG.7a

5 25 18 25 38 19 36 39 25 35 34 24 23

29
30
32

31 7 71 22 72 27 26 28

FIG.7a

46 37 4 33 46 2

43 43

45

43 44 45 37 33 43 44

FIG.7a

EP 0 235 488 B1

FIG.8

EP 0 235 488 B1

**FIG.9**

**FIG.10**

**FIG.11a**

**FIG.11b**

FIG.12

FIG.13a

FIG.13b

FIG.14